# EUROPÄISCHE PATENTSCHRIFT

(11) **EP 3 790 917 B1**
(45) Veröffentlichungstag und Bekanntmachung des Hinweises auf die Patenterteilung: **02.08.2023**
(21) Anmeldenummer: 19721300.2
(22) Anmeldetag: 07.05.2019
(51) Int. Cl.: C08G 59/02, C09D 5/44, C09D 163/00, F16F 7/00, F16F 7/09

(54) **EPOXIDHARZ BASIERTE KATHODISCHE TAUCHLACKIERUNG (KTL) VON METALLBAUTEILEN ALS HAFTVERMITTLER ZU PU SYSTEMEN**
EPOXY RESIN BASED CATHODIC DIP COATING (KTL) OF METAL COMPONENTS AS ADHESION PROMOTERS FOR PU SYSTEMS
PEINTURE PAR IMMERSION CATHODIQUE (CDC) À BASE DE RÉSINE ÉPOXYDE DES COMPOSANTS MÉTALLIQUES EN TANT QU'UN AGENT ADHÉSIF POUR SYSTÈMES PU

(30) Priorität: 07.05.2018 EP 18170983
(43) Veröffentlichungstag der Anmeldung: 17.03.2021
(73) Patentinhaber: BASF Polyurethanes GmbH, 49448 Lemförde (DE)
(72) Erfinder: ESCH, Moritz, 49448 Lemfoerde (DE); HORSTMANN, Andreas, 49448 Lemfoerde (DE); MAIER, Maximilian, 49448 Lemfoerde (DE)
(74) Vertreter: BASF IP Association
(86) Internationale Anmeldenummer: PCT/EP2019/061632
(87) Internationale Veröffentlichungsnummer: WO 2019/215119

(56) Entgegenhaltungen:
- WO-A1-98/33835
- US-A1- 2011 135 867

## Beschreibung

Die vorliegende Erfindung betrifft ein Kompositelement, insbesondere für ein Dämpfungselement, umfassend a) mindestens einen metallischen Körper aufweisend eine Oberfläche; b) eine Beschichtung umfassend ein Epoxidharz auf mindestens einem Teil der Oberfläche des metallischen Körpers; c) einen Kunststoffkörper umfassend mindestens ein Polyurethan, welcher den metallischen Körper gemäß (a) zumindest teilweise umschließt und im Bereich der Umschlie-ßung zumindest teilweise in direktem Kontakt mit der Beschichtung gemäß (b) steht, wobei das Kompositelement zwischen der Oberfläche des metallischen Körpers (a) und der Beschichtung (b) eine Konversionsschicht (d) aufweist, welche mindestens eine Verbindung ausgewählt aus der Gruppe von Zirkon(IV)oxid, Zink(II)phosphat und Chromat umfasst. Die Erfindung betrifft weiterhin ein Dämpfungselement umfassend das Kompositelement und mindestens einen weiteren Körper, welcher zumindest teilweise in direktem Kontakt mit dem Kompositelement, bevorzugt mit dem Kunststoffkörper gemäß (c), steht. Weiterhin betrifft die Erfindung Herstellungsverfahren für Kompositelement und Dämpfungselement, die nach diesen Verfahren hergestellten oder herstellbaren Komposit- bzw. Dämpfungselemente und die Verwendung dieser Komposit- bzw. Dämpfungselemente.

Dämpfungselemente sind prinzipiell seit langem bekannt und werden in diversen Bereichen eingesetzt. Sie dienen der Absorption kinetischer Energie von Aggregaten bzw. Baugruppen. Allgemein bekannt sind Stoß- bzw. Schwingungsdämpfer in den verschiedensten Kraftfahr- und Flugzeugen, wo sie als sicherheitsrelevante Bauteile die Schwingungen der jeweiligen gefederten Masse schnell abklingen lassen. Bei Fahrzeugen prägt die Reifen-Radaufhängung durch ihre Federungs- und Dämpfungsabstimmung den Charakter des Fahrzeugs in Bezug auf Fahrdynamik und -komfort. Je nach geometrischer Ausführung einer Fahrzeugachse sind Schwingungsdämpfer entweder am oberen oder an beiden Enden über eine elastische Lagerung mit der Radaufhängung verbunden, wobei als Dämpfungselemente oftmals Hybridsysteme aus Kunststoff- und Metallkomponenten eingesetzt werden. Aufgrund der immer höheren Kräfte, die auf ein solches Dämpfungselement einwirken, kommen solche Hybridsysteme merklich an ihre Grenzen, so ist meist der Verbund zwischen Kunststoff- und Metallelementen nicht ausreichend und es kommt zur anteiligen oder gänzlichen Trennung dieser Komponenten, was sich negativ auf das gesamte Dämpfungslager auswirkt.

Bei der Verwendung von beispielsweise Stahlwerkstoffen als metallischer Körper in Dämpfungselementen wird bisher meist nur auf einen ausreichenden Korrosionsschutz geachtet. Dieser wird üblicherweise durch eine auf dem metallischen Körper galvanisch aufgebrachte Zink-Eisen-Beschichtung (ZnFe) bzw. durch eine Zink-Nickel-Beschichtung (ZnNi) gewährleistet. In Dämpfungselementen wurden dann bisher solche gegen Korrosion beschichtete metallische Körper direkt mit dem jeweiligen Kunststoffkörper verbunden, beispielsweise mittels Polyurethan (PU)-Reaktionsgussverfahren. Durch Aufbringen einer Zugscherkraft oberhalb der Bruchkraft ergab sich dann allerdings ein adhäsives Lösen des Kunststoffkörpers von der ZnFe- bzw. ZnNi-Beschichtung, was wie oben beschrieben negativ für das Dämpfungselement war. Um eine ausreichende Belastbarkeit des Dämpfungselementes zu gewährleisten, ist vielmehr bei einer Zugscherprüfung ein kohäsiver Bruch im Kunststoffkörper anzustreben. Dies wurde üblicherweise durch Aufbringen eines typischen ein- oder zwei-komponentigen nasschemischen Haftvermittlers auf die Korrosionsschutzschicht erreicht. Die Auftragung eines zusätzlichen Haftvermittlers auf die Korrosionsschutzschicht ist allerdings mit zusätzlichen Kosten verbunden und erfordert zusätzliche, zeit- und kostenintensive Prozessschritte in der Herstellung des Dämpfungselements. Insbesondere, wenn der Haftvermittler nur partiell aufgetragen werden darf, z.B. um Anschraubflächen auf dem metallischen Körper frei zu halten, ist das Verfahren zum Auftragen aufwendig und mit hohen Kosten verbunden, wodurch das Dämpfungselement in der Herstellung unwirtschaftlich wird. US 2011/135867A1 beschreibt ein Dämpfungselement bestehend aus einem metallischen Körper, auf welchen als Haftvermittler zwischen dem Metallkörper und einer PolyurethanSchicht eine Polyurethanbeschichtung aufgetragen ist.

WO 98/33835 A1, EP 0 961 797 B1 offenbaren den Einsatz wässriger Epoxid-Dispersionen in Form von kathodisch abscheidbaren Elektrotauchlacken als Beschichtungen auf einem Metallkörper.

US 8,459,621 B1 beschreibt eine Polyurethan-Beschichtung, welche als Haftvermittler zwischen einem weiteren, mikrozellulärem, Polyurethan und einem metallischen Element eingesetzt wird. Die Polyurethan-Schicht fungiert dabei als Korrosionsschutz und bindet auf molekularer Ebene an das mikrozelluläre Polyurethan, wofür die Polyurethan-Beschichtung freie aktive Funktionalitäten aufweisen muss, welche mit freien Isocyanatgruppen des mikrozellulären Polyurethans während der Polymerisation unter Ausbildung kovalenter Allophonat-Bindungen reagieren, d.h. es ist für die Anbindung des mikrozellulären Polyurethans an die Polyurethan-Beschichtung ein zusätzlicher Schritt der Aushärtung bzw. Polymerisation erforderlich.

Aufgabe der vorliegenden Erfindung war daher die Bereitstellung eines Kompositelements bzw. eines Dämpfungselements, welches die oben genannten Nachteile nicht aufweist und eines Herstellungsverfahrens für ein Komposit- bzw. Dämpfungselement, welches möglichst simpel sein und ein Minimum an erforderlichen Schritten aufweisen sollte.

Erfindungsgemäß wird diese Aufgabe gelöst durch ein Kompositelement, insbesondere für ein Dämpfungselement, umfassend
a) mindestens einen metallischen Körper aufweisend eine Oberfläche;
b) eine Beschichtung umfassend ein Epoxidharz auf mindestens einem Teil der Oberfläche des metallischen Körpers;
c) einen Kunststoffkörper umfassend mindestens ein Polyurethan, welcher den metallischen Körper gemäß (a) zumindest teilweise umschließt und im Bereich der Umschließung zumindest teilweise in direktem Kontakt mit der Beschichtung gemäß (b) steht.

Es zeigte sich überraschend, dass eine Epoxid-Beschichtung in Bezug auf die Anforderungen an die Haftvermittlung zwischen einem Kunststoffkörper und einem metallischen Körper einer reinen galvanischen Korrosionsschutzbeschichtung (ZnNi oder ZnFe) deutlich überlegen war bzw. die Anforderungen an die Haftvermittlung zwischen einem Kunststoffkörper und einem metallischen Körper genauso gut wie eine Kombination aus einer herkömmlichen galvanischen Korrosionsschutzbeschichtung (ZnNi oder ZnFe) und einem für diesen Zweck zusätzlich aufgetragener Haftvermittler erfüllte. Überraschenderweise wurde gefunden, dass die Beschichtung auf Epoxidharzbasis den Vorteil bot, dass sie gleichzeitig die Funktion des Korrosionsschutzes und der Haftvermittlung erfüllte, und somit von den Prozesskosten und der Anzahl erforderlicher Prozessschritte deutlich niedriger ausfiel als bei Verwendung eines galvanischen Korrosionsschutzes mit zusätzlichem nasschemisch aufgetragenen Haftvermittler.

Zusätzlich kann die Epoxidschicht auch im Bereich der Verschraubung der Dämpfungselemente eingesetzt werden, wodurch bei der Beschichtung ein wirtschaftlicheres Verfahren, beispielsweise ein Tauchverfahren eingesetzt werden kann anstelle einer teuren partiellen Auftragung eines Haftvermittlers. Weiterhin ist die Epoxidharz-Beschichtung auch bei metallischen Körpern aus Nichteisenmetallen, wie z.B. Aluminium, bei denen kein zusätzlicher Korrosionsschutz erforderlich ist, wirtschaftlicher zur Haftvermittlung einsetzbar, als ein nasschemischer, partiell aufgetragener Haftvermittler.

In einer Ausführungsform des Kompositelement ist die Beschichtung umfassend ein Epoxidharz gemäß (b) auf mindestens einem Teil der Oberfläche des metallischen Körpers gemäß (a) aufgebracht oder aufbringbar mittels eines Verfahrens ausgewählt aus der Gruppe bestehend aus Sprühen und Lackieren, bevorzugt Lackieren, weiter bevorzugt Tauchlackierung, weiter bevorzugt kathodische Tauchlackierung.

Bevorzugt weist der metallische Körper gemäß (a) auf seiner Oberfläche keine Korrosionsschutzbeschichtung auf, d.h. es befindet sich auf seiner Oberfläche keine Eisen-Beschichtung (ZnFe) oder Zink-Nickel-Beschichtung (ZnNi). Die Beschichtung umfassend ein Epoxidharz gemäß (b) ist somit direkt auf mindestens einem Teil der Oberfläche des metallischen Körpers gemäß (a) aufgetragen.

### Epoxidharz gemäß (b)

Das Epoxidharz gemäß (b) ist grundsätzlich keinen Beschränkungen unterworfen. Bevorzugt ist das Epoxidharz gemäß (b) ein Epoxidharz, welches bevorzugt erhalten oder erhältlich ist aus einer wasserhaltigen Epoxidharz-Dispersion, welche bevorzugt mehr als 50 Gewichts-% Wasser, bezogen auf das Gesamtgewicht der wasserhaltigen Epoxidharz-Dispersion, aufweist.

Die Epoxidharz-Dispersion umfasst bevorzugt ein Epoxidharz aufweisend Ammoniumgruppen, welches weiter bevorzugt erhalten oder erhältlich durch
A) Umsetzung mindestens der Komponenten
   i) ein Vorprodukt, welches unter Zusatz von Phosphinen und/oder Phosphinsalzen als Katalysator hergestellt oder herstellbar ist aus
      i.a) mindestens einer Diepoxidverbindung;
      i.b) mindestens einem Mono- oder Diphenol oder einer Mischung aus einem Mono- und einem Diphenol;
   ii) mindestens einem organischen Amin;
   bei einer Zugabetemperatur im Bereich von 60 bis 130°C zu einem Epoxid-Amin-Addukt;
B) anschließende oder gleichzeitige Umsetzung der sekundären Hydroxylgruppen, die bei der Umsetzung der Komponenten i.a) und i.b) gebildet worden sind, mit Epoxidgruppen des in Stufe A) hergestellten Epoxid-Amin-Adduktes bei einer Temperatur von 110 bis 150°C,
C) Zusatz mindestens eines Vernetzungsmittels bei einer Temperatur von <150°C,
D) Neutralisierung;
E) Dispergierung der in den Stufen A) bis D) erhaltenen Mischung in Wasser.

Eine entsprechende Epoxidharz-Dispersion ist beispielsweise beschrieben in EP 0 961 797 B1. Die wasserhaltige Dispersion weist bevorzugt einen Feststoffgehalt im Bereich von 35 bis 45 Gewichts-% auf, wobei gleichzeitig die Viskosität ausreichend niedrig ist. In dem Vorprodukt gemäß (i) können als Komponente (i.a) alle Verbindungen eingesetzt werden, die zwei reaktive Epoxidgruppen enthalten und ein Epoxidäquivalentgewicht (EEW) aufweisen, das bevorzugt unter 1000, weiter bevorzugt unter 500 liegt. Besonders bevorzugte Diepoxidverbindungen sind aus Polyphenolen und Epihalohydrinen hergestellte Diglycidylether von Polyphenolen. Als Polyphenole können eine oder mehrere Verbindungen ausgewählt aus der Gruppe bestehend aus Bisphenol A, Bisphenol F, 1,1-Bis-(4-hydroxyphenyl)-n-heptan, 4,4'-Dihydroxybenzophenon, Bis-( 4-hydroxyphenyl)-1,1-ethan, Bis-( 4-hydroxyphenyl) 1,1-isobutan, Bis-(4-hydroxy-tertiär-butylphenyl)-2,2-propan, Bis-(2-hydroxynaphtyl)methan, 1,5 Dihydroxynaphtalin und phenolisches Novalackharz verwendet werden. Bevorzugte Diepoxidverbindungen sind auch Diglycidylether von mehrwertigen Alkoholen wie Ethylenglykol, Diethylenglykol, Triethylenglykol, 1,2-Propylenglykol, 1,4-Propylenglykol, 1,5-Pentandiol, 1,2,6-Hexantriol, Glycerin und Bis-(4-hydroxycyclohexyl)-2,2-propan. Es können auch Diglycidylester von Polycarbonsäuren, wie zum Beispiel Oxalsäure, Bernsteinsäure, Glutarsäure, Terephthalsäure, 2,6-Naphtalindicarbonsäure, dimerisierter Linolensäure eingesetzt werden. Typische Beispiele sind Glycidyladipat und Glycidylphthalat. Ferner sind Hydantoinepoxide, epoxidiertes Polybutadien und Diepoxidverbindungen geeignet, die man durch Epoxidierung einer olefinisch ungesättigten alicyclischen Verbindung erhält. Besonders bevorzugt wird als Diepoxidverbindung gemäß (i.a) ein aus Bisphenol A und Epihalohydrinen hergestellter Diglycidylether dess Bisphenol As verwendet, welcher besonders bevorzugt ein EEW von weniger als 500, weiter bevorzugt von weniger als 300, weiter bevorzugt von weniger als 200, aufweist.

Als Komponente (i.b) des Vorprodukts gemäß (i) werden Monophenole, Diphenole, z.B. Bisphenol A, oder Gemische von Mono- und Diphenolen eingesetzt, bevorzugt mindestens Bisphenol A. Die Reaktion in Stufe (i) wird vorzugsweise bei 120 bis 180°C, vorzugsweise 125 bis 150 °C durchgeführt. Gegebenenfalls wird in dieser Stufe wenig Lösemittel zugegeben. Bevorzugt sind hierfür Xylol oder Propylenglykolmo-noalkylether wie Propylenglykolmethylether oderethylether. Durch Zusatz von Phosphin oder Phosphinderivaten bzw. Phosphinsalzen als Katalysatoren wird die Reaktion der Komponenten (i.a) und (i.b) derart gesteuert, daß nur phenolische Hydroxylgruppen, nicht jedoch sekundäre Hydroxylgruppen mit Epoxidgruppen reagieren. Die sekundären Hydroxylgruppen entstehen bei der Reaktion der Komponenten (i.a) und (i.b). Das verwendete Phosphin kann ein beliebiges Phosphin sein, das keine störenden Gruppen enthält. Beispiele solcher Phosphine sind aliphatische, aromatische oder alicyclische Phosphine, wobei als spezifische Beispiele folgende Phosphine genannt seien: Niedrige Trialkylphosphine, wie Trimethylphosphin, Triethylphosphin, Tripropylphosphin, Tributylphosphin, gemischte niedrige Alkylphenylphosphine, wie Phenyldimethylphosphin, Phenyldiethylphosphin, Phenyldipropylphosphin, Diphenylmethylphosphin, Diphenylethylphosphin, Diphenylpropylphosphin, Triphenylphosphin, alicyclische Phosphine, wie Tetramethylenethylphosphin und dergleichen. Besonders bevorzugt ist Triphenylphosphin. Der selektive Umsatz der phenolischen Hydroxylgruppen, der durch den Zusatz der erwähnten Katalysatoren gezielt gesteuert wird, bewirkt, daß das mittlere Molekulargewicht des Vorprodukts gemäß (i) unter 1500 g/mol, vorzugsweise unter 1000 g/mol liegt. Der Festkörpergehalt des Vorprodukts liegt bei 90 Gewichts-%, vorzugsweise bei 95-100 Gewichts-%. In Stufe (ii) können nach bzw. unter Reduzierung der Reaktionstemperatur der gemäß Stufe (i) primäre, sekundäre oder tertiäre Amine bzw. deren Salze oder ein Gemisch aus diesen Verbindungen zugesetzt werden. Vorzugsweise liegen die Temperaturen bei 60 bis 130 °C, vorzugsweise bei 90 bis 115 °C. Bevorzugt ist das Amin eine in Wasser lösliche Verbindung. Beispiele solcher Amine sind Mono- und Dialkylamine, wie Methylamin, Ethylamin, Propylamin, Butylamin, Dimethylamin, Diethylamin, Dipropylamin, Methylbutylamin und dergleichen. Geeignet sind ebenfalls Alkanolamine wie z.B. Methylethanolamin, Diethanolamin und dergleichen. Ferner sind Dialkylaminoalkylamine wie z.B. Dimethylaminoethylamin, Diethylaminopropylamin, Dimethylaminopropylamin und dergleichen geeignet. In den meisten Fällen werden niedermolekulare Amine verwendet, doch ist es auch möglich, höhermolekulare Monoamine anzuwenden. Polyamine mit primären und sekundären Aminogruppen können in Form ihrer Ketimine mit den Epoxidgruppen umgesetzt werden. Die Ketimine werden aus den Polyaminen in bekannter Weise hergestellt. Als Salz eines Amins kann vorzugsweise das Salz eines tertiären Amins verwendet werden. Der Aminanteil des Amin-Säuresalzes ist ein Amin, das unsubstituiert oder substituiert wie im Falle des Hydroxylamins sein kann, wobei diese Substituenten die Umsetzung des Amin-Säuresalzes mit dem Polyepoxid nicht stören sollen und die Reaktionsmischung nicht gelieren soll. Bevorzugte Amine sind tertiäre Amine, wie Dimethylethanolamin, Triethylamin, Trimethylamin, Triisopropylamin und dergleichen. Besonders bevorzugt werden als mindestens eines organisches Amin gemäß (ii) Diethanolamin oder Dimethylaminopropylamin oder eine Mischung aus Diethanolamin oder Dimethylaminopropylamin verwendet.

In Stufe A) können vor oder nach Zusatz des Amins ggf. noch Weichmacher bzw. nicht flüchtige Verdünnungsmittel auf Basis von mono- oder polyfunktionellen Alkoholen zugesetzt werden. Beispielsweise sind Polypropylenglykolverbindungen wie Pluriol P 600, P900, PE 3100 oder Plastilit 3060 (alle Warenzeichen der Firma BASF) verwendbar. Bevorzugt wird zumindest eine Polypropylenglykolverbindung wie Plastilit 3060 eingesetzt. Weitere bevorzugte Ausführungsformen der Epoxidharz-Dispersion bzw. des Verfahrens zu dessen Herstellung sind in EP 0 961 797 B1 beschrieben.

In Stufe A) entstehen Verbindungen, die freie Epoxidgruppen enthalten. Die Epoxiäquivalentgewichte können zwischen 200 und 2000 g/mol der Komponente A) liegen, vorzugsweise 400 und 700 g/mol. Die nach Stufe A) verbliebenen Epoxidgruppen werden in Stufe B) bei erhöhten Temperaturen mit sekundären Hydroxylgruppen, die bei der Umsetzung der Komponenten a) und b) gebildet worden sind, zur Reaktion gebracht. Vorzugsweise wird die Reaktion bei 110-150°C, besonders bevorzugt bei 130 °C durchgeführt. Reicht die Temperaturerhöhung nicht aus, die durch den Anstieg des Molekulargewichts ebenfalls anwachsende Viskosität abzusenken, so können zusätzliche Maßnahmen ergriffen werden. Die Reaktion in Stufe B) wird vorzugsweise in Gegenwart von Katalysatoren durchgeführt. Besonders bevorzugt wird in Gegenwart von tertiären Aminogruppen gearbeitet.

Die derart hergestellten Bindemittel werden in Stufe C) mit Vernetzungsmitteln versetzt. Als Vernetzungsmittel eignen sich praktisch alle mit Hydroxylgruppen reagierende, mindestens bifunktionelle Verbindungen wie z.B. Polyalkohole, Polyphenole, blockierte Palyisocyanate, Phenoplaste oder Aminoplaste. Die Vernetzungsmittel werden in der Regel in einer Menge von 5 bis 50, bevorzugt 25 bis 40 Gewichts-% bezogen auf das Bindemittel und einer Temperatur von < 150 °C, vorzugsweise 90 bis 130 °C eingesetzt, wobei bevorzugte Vernetzungsmittel in der EP 0 961 797 B1 beschrieben sind. Beispiele für geeignete Aminoplastvernetzungsmittel sind der Hexamethylether von Hexamethylolmelamin, der Triethyltrimethylethevon Hexamethylolmelamin, der Hexabutylether von Hexamethylolmelamin und der Hexamethylether von Hexamethylolmelamin und polymere butylierte Melaminformaldehydharze. Ebenso verwendbar sind alkylierte Harnstofformaldehydharze. Als Vernetzungsmittel werden bevorzugt blockierte Polyisocyanate eingesetzt. Es können beliebige Polyisocyanate benutzt werden, bei denen die Isocyanatgruppen mit einer Verbindung umgesetzt worden sind, so daß das gebildete blockierte Polyisocyanat gegenüber Hydroxylgruppen bei Raumtemperatur beständig ist, bei erhöhten Temperaturen, in der Regel im Bereich von etwa 90 bis etwa 300 °C aber reagiert. Bei der Herstellung der blockierten Polyisocyanate können beliebige für die Vernetzung geeignete organische Polyisocyanate verwendet werden. Bevorzugt sind die Isocyanate, die etwa 3 bis etwa 36, insbesondere etwa 8 bis etwa 15 Kohlenstoffatome enthalten. Beispiele geeigneter Diisocyanate sind Trimethylendiisocyanat, Tetramethylendiisocyanat, Pentamethylendiisocyanat Hexamethylendiisocyanat, Propylendiisocyanat, Ethylethylendiisocyanat, 2,3-Dimethylethylendiisocyanat,1-Methyltrimethylendiisocyanat, 1,3-Cyclopentylendiisocyanat, 1,4-Cyclohexylendiisocyanat, 1,2-Cyclohexylendi-isocyanat, 1,3-Phenylendiisocyanat, 1,4-Phenylendiisocyanat, 2,4-Toluylendiisocyanat, 2,6-Tolulendiisocyanat, 4,4'-Diphenylendiisocyanat, 1,5-Naphthylendiisocyanat, 1,4-Naphthylendiisocyanat,1-Isocyanatomethyl-5-isocyanato-1,3,3-trimethylcyclohexan, bis(4-Isocyanatocyclohexyl)methan, bis(4-Isocyanatophenyl methan, 4,4'-Diisocyanatodiphenylether und 2,3-bis(8-Isocyanatooctyl)-4-octyl-5-hexylcyclohexen. Es können auch Polyisocyanate von höherer Isocyanatfunktionalität verwendet werden. Beispiele dafür sind tris(4-Isocyanatophenyl)methan, 1,3,5-Triisocyanato-benzol, 2,4,6-Triisocyanatotoluol, 1,3,5-tris (6-Isocyanatohexylbiuret), bis-(2,5-Diisocyanato-4-methylphenyl)methan, und polymere Polyisocyanate, wie Dimere und Trimere von Diisocyanatotoluol. Ferner kann man auch Mischungen von Polyisocyanaten benutzen. Die bei der Erfindung als Vernetzungsmittel in Betracht kommenden organischen Polyisocyanate können auch Präpolymere sein, die sich beispielsweise von einem Polyol einschließlich eines - Polyetherpolyols oder eines Polyesterpolyols ableiten. Für die Blockierung der Polyisocyanate können beliebige geeignete aliphatische, cycloaliphatische oder aromatische Alkylmonoalkohole verwendet werden. Beispiele dafür sind aliphatische Alkohole, wie Methyl-, Ethyl-, Chlorethyl-,Propyl-, Butyl-, Amyl-, Hexyl-, Heptyl-, Octyl-, Nonyl-, 3,3,5-Trimethylhexyl-, Decyl- und Laurylalkohol; cycloaliphatische Alkohole wie Cyclopentanol und Cyclohexanol; aromatische Alkylalkohole, wie Phenylcarbinol und Methylphenylcarbinol. Andere geeignete Blockierungsmittel sind Hydroxylamine wie Ethanolamin, Oxime wie Methylethylketonoxim, Acetonoxim und Cyclohexanonoxim oder Amine wie Dibutylamin und Diisopropylamin. Die genannten Polyisocyanate und Blockierungsmittel können bei geeigneten Mengenverhältnissen auch zur Herstellung der oben beschriebenen teilblockierten Polyisocyanate verwendet werden. Besonders bevorzugt wird als Vernetzungsmittel gemäß (C) ein blockiertes Polyisocyanat verwendet, welches erhalten oder erhältlich ist durch Umsatz von 4,4'-Diphenylendiisocyanat mit Butyldiglycol.

Geeignete Polyphenole sind in EP 0 961 797 B1, insbesondere in den Absätzen [0052] bis [0055], beschrieben. In Stufe D) wird schließlich eine Neutralisierung durchgeführt. Dies geschieht vorzugsweise durch Zusatz von Säuren bei 90 bis 110 °C. Schließlich wird in Stufe E) eine Dispergierung der in den Stufen A) bis D) erhalten Mischung unter Zusatz von Wasser durchgeführt. In einer anderen Ausgestaltung ist es auch möglich, die Neutralisationssäure in Wasser zu geben und die Harzmischung in das angesäuerte Wasser einzudispergieren.

In einer bevorzugten Ausführungsform des Epoxidharzes bzw. der Epoxidharzdispersion wird ein Epoxidharz aufweisend Ammoniumgruppen, verwendet, welches weiter bevorzugt erhalten oder erhältlich durch
A) Umsetzung mindestens der Komponenten
   i) ein Vorprodukt, welches unter Zusatz von Phosphinen und/oder Phosphinsalzen, welche mindestens Triphenylphosphin umfassen, als Katalysator hergestellt oder herstellbar ist aus
      i.a) mindestens einer Diepoxidverbindung, welche mindestens ein Digylcidylether von Bisphenol A umfasst;
      i.b) mindestens einem Mono- oder Diphenol oder einer Mischung aus einem Mono- und einem Diphenol, welche mindestens Bisphenol A umfasst;
   ii) mindestens einem organischen Amin, welches mindestens Diethanolamin und/oder Dimethylaminopropylamin, umfasst; wobei optional mindestens eine Polypropylenglykolverbindung, weiter bevorzugt Plastilit 3060, vor oder nach Zusatz des Amins gemäß (ii) zugesetzt wird;
   bei einer Zugabetemperatur im Bereich von 60 bis 130°C zu einem Epoxid-Amin-Addukt;
B) anschließende oder gleichzeitige Umsetzung der sekundären Hydroxylgruppen, die bei der Umsetzung der Komponenten i.a) und i.b) gebildet worden sind, mit Epoxidgruppen des in Stufe A) hergestellten Epoxid-Amin-Adduktes bei einer Temperatur von 110 bis 150°C,
C) Zusatz mindestens eines Vernetzungsmittels, welches mindestens ein blockiertes Polyisocyanat umfasst, welches erhalten oder erhältlich ist durch Umsatz von 4,4'-Diphenylendiisocyanat mit Butyldiglycol, bei einer Temperatur von <150°C;
D) Neutralisierung;
E) Dispergierung der in den Stufen A) bis D) erhaltenen Mischung in Wasser.

Die Teilchengröße der dispergierten Phase liegt bei 30 bis 1000 nm, vorzugsweise 50 bis 180 nm. Weitere Zusätze zur wasserhaltigen Epoxidharz-Dispersion sowie entsprechende Pigmentpasten sind ebenfalls in der EP 0 961 797 B1 beschrieben. Eine im Rahmen einer Ausführungsform besonders geeignete wasserhaltige Epoxidharz-Dispersion ist die Bindemitteldispersion C gemäß Beispiel 2.3 der EP 0 961 797 B1.

### Beschichtung umfassend ein Epoxidharz gemäß (b)

Die Beschichtung umfassend ein Epoxidharz gemäß (b) ist grundsätzlich hinsichtlich ihrer Dicke keinen Beschränkungen unterworfen. In einer Ausgestaltung des Kompositelements weist die Beschichtung gemäß (b) eine Schichtdicke im Bereich von 1 bis 100 Mikrometer, bevorzugt im Bereich von 5 bis 60 Mikrometer, weiter bevorzugt im Bereich von 10 bis 50 Mikrometer, weiter bevorzugt im Bereich von 20 bis 40 Mikrometer, auf, bestimmt gemäß DIN EN ISO 2808.

Weiterhin weist die Beschichtung gemäß (b) bevorzugt eine Trockenfilmdichte im Bereich von 0,5 bis 5 g/cm³, bevorzugt im Bereich von 1 bis 2,5 g/cm³, weiter bevorzugt im Bereich von 1,1 bis 2,0 g/cm³, weiter bevorzugt im Bereich von 1,3 bis 1,4 g/cm³ auf, bestimmt gemäß DIN 53219.

### Polyurethan des Kunststoffkörpers gemäß (c)

Der Kunststoffkörper gemäß (c) des Kompositelements umfasst mindestens ein Polyurethan, welches bevorzugt erhalten oder erhältlich ist durch Umsetzung mindestens der Komponenten:
(iii) eine Polyisocyanatzusammensetzung;
(iv) eine Polyolzusammensetzung;
(v) optional eine Kettenverlängererzusammensetzung.

Die Polyisocyanatzusammensetzung gemäß (iii) enthält mindestens ein Polyisocyanat ausgewählt aus den Diisocyanaten, bevorzugt ausgewählt aus der Gruppe bestehend aus 1,5-Naphthalendiisocyanat (1,5-NDI), 3,3'-Dimethylbiphenyl-4,4'-diyldiisocyanat (TODI), 2,2'-Diphenylmethandiisocyanat (2,2'-MDI), 2,4'- Diphenylmethandiisocyanat (2,4'-MDI), 4,4'-Diphenylmethandiisocyanat (4,4'-MDI), carbodiimid-modifiziertes 4,4'-MDI, Hexamethylen-1,6-diisocyanat (HDI) und 4,4'-, 2,4'- und 2,2'-Methylendicyclohexyldiisocyanat (H12MDI) und höherkernigen Homologen des Methandiphenyldiisocyanats (Polymer-MDI), weiter bevorzugt mindestens 4,4'-MDI oder carbodiimid-modifiziertes 4,4'-MDI oder eine Mischung aus 4,4'-MDI und carbodiimid-modifiziertem 4,4`-MDI. Die Polyolzusammensetzung gemäß (iv) umfasst mindestens ein Polyester-, Polyether- oder Polyetheresterpolyol, bevorzugt ausgewählt aus der Gruppe der zwei bis sechsfunktionalen Polyesterpolyole und Polyetherpolyole, bevorzugt aus der Gruppe der zwei- und drei funktionalen Polyesterpolyole, bevorzugt aus der Gruppe der zwei -und drei funktionalen Adipinsäureester. Die Kettenverlängererzusammensetzung gemäß (iv) umfasst mindestens eine Verbindung, welche mindestens zwei gegenüber Isocyanaten reaktive funktionelle Gruppen, bevorzugt zwei gegenüber Isocyanaten reaktive funktionelle Gruppen, aufweist, wobei die gegenüber Isocyanaten reaktiven funktionellen Gruppen bevorzugt ausgewählt sind aus der Gruppe von Hydroxylgruppe, Aminogruppe und Thiolgruppe, wobei die mindestens eine Verbindung, welche gegenüber Isocyanaten reaktive funktionelle Gruppen aufweist, weiter bevorzugt ausgewählt ist aus der Gruppe bestehend aus Monoethylenglycol, 1,4-Butandiol, Diethylengylcol, Glycerin, Trimethylolpropan und 2,4-Diamino-3,5-di(methylthio)-toluol, und weiter bevorzugt mindestens 1,4-Butandiol umfasst.

In einer bevorzugten Ausgestaltung des Kompositelements liegt die Polyisocyanatzusammensetzung (iii) in Form eines isocyanatterminierten Prepopylmers (iii.a), erhalten oder erhältlich aus der Umsetzung von Polyisocyanatzusammensetzung (iii) mit einem Teil der Polyolzusammensetzung (iv), vor, und das Polyurethan ist erhalten oder erhältlich ist durch Umsetzung von mindestens den Komponenten
(iii.a) isocyanatterminiertes Prepolymer;
(iv.a) verbliebener Teil der Polyolzusammensetzung (iv);
(v) optional Kettenverlängererzusammensetzung.

Bevorzugt ist das mindestens eine Polyurethan des Kunststoffkörpers gemäß (c) ein Polyurethangießelastomer oder ein Polyurethanschaum, weiter bevorzugt ein Polyurethangie-ßelastomer.

In einer besonders bevorzugten Ausführungsform ist das Polyurethan des Kunststoffkörpers gemäß (c) ein Polyurethangießelastomer, welches erhalten oder erhältlich ist durch Umsetzung eines Prepolymers auf Basis von 4,4'-Diphenylmethan-diisocyanat, carbodiimidmodifiziertem 4,4'-MDI; linearem Polyesterdiol mit einer Hydroxylzahl im Bereich von 35 bis 120 mg KOH/g aufgebaut aus Adipinsäure, Ethylenglykol und 1,4-Butandiol und/oder einem verzweigtem Polyesterdiol mit einer Hydroxylzahl im Bereich von 35 bis 120 mg KOH/g, aufgebaut aus Adipinsäure, Ethylenglykol und 1,4-Butandiol; jeweils aufweisend einen NCO-Gehalt im Bereich von 10 bis 28 Gewichts-%; mit einem Polyol, welches bevorzugt ein lineares Polyesterdiol mit einer Hydroxylzahl im Bereich von 35 bis 120 mg KOH/g aufgebaut aus Adipinsäure, Ethylenglykol und 1,4-Butandiol umfasst, weiter bevorzugt ist; und wobei als Kettenverlängerer mindestens ein lineares aliphatisches Diol mit 2 bis 6 Kohlenstoffatomen, weiter bevorzugt mindestens 1,4-Butandiol, eingesetzt wird. Polyisocyanatkomponente, bevorzugt Prepolymer, und Polyolkomponente werden, bevorzugt vortemperiert auf Temperaturen im Bereich von 30 bis 70 °C, weiter bevorzugt im Bereich von 40 bis 60°C, zusammengeführt und anschließend als reaktives Gemisch bei einer Temperatur im Bereich von 80 bis 100 °C zur Reaktion gebracht. Bevorzugt erfolgt eine thermische Nachbehandlung für eine Zeitspanne von 24 bis 48 Stunden bei einer Temperatur im Bereich von 80 bis 100 °C.

### Metallischer Körper

Grundsätzlich ist das Metall des metallischen Körpers keinen Beschränkungen unterworfen, wobei Reinmetalle und Legierungen umfasst sind. Bevorzugt umfasst der metallische Körper des Kompositelements eine Eisenlegierung, bevorzugt Stahl, oder Aluminium. In einer Ausführungsform umfasst der metallische Körper eine Eisenlegierung, bevorzugt Stahl, bevorzugt besteht er zu mindestens 99 Gewichts-% aus Stahl, bezogen auf das Gesamtgewicht des metallischen Körpers. In einer weiteren Ausführungsform umfasst der metallische Körper Aluminium, bevorzugt besteht er zu mindestens 99 Gewichts-% aus Aluminium, bezogen auf das Gesamtgewicht des metallischen Körpers. Hinsichtlich der Form bestehen ebenfalls keine grundsätzlichen Beschränkungen für den metallischen Körper. Bevorzugt weist der metallische Körper des Kompositelements eine Form ausgewählt aus der Gruppe bestehend aus Scheibe, Lochscheibe, Ring, Zylinder und Hohlzylinder auf, wobei ein Hohlzylinder bevorzugt auch eine Hülse umfasst.

Das Kompositelement weist zwischen der Oberfläche des metallischen Körpers (a) und der Beschichtung (b) eine Konversionsschicht (d) auf, welche mindestens eine Verbindung ausgewählt aus der Gruppe von Zirkon(IV)oxid, Zink(II)phosphat und Chromat, bevorzugt mindestens Zirkon(IV)oxid und/oder Zinkphosphat, weiter bevorzugt mindestens Zirkon(IV)oxid, umfasst. Chromat umfasst hierbei diverse, durch Einwirkung von Chromsäure erhaltene oder erhältliche Chromsäuresalze (Chromatierung), wobei bevorzugt Cr(VI)-Verbindungen ausgenommen sind. Zirkon(IV)oxid ist bevorzugt allein oder in Mischung mit Molybdänoxid und/oder einem oder mehreren Polyorganosilan(en) vorhanden. Bevorzugt weisen Zirkon(IV)oxid-haltige Konversionsschichten (d) 1 bis 100 mg/m², bevorzugt 1 bis 80 mg/m², weiter bevorzugt 2 bis 50 mg/m², an Zirkonium, auf, jeweils bestimmt mittels Röntgenfluoreszenzanalyse (RFA). Zink(II)phosphat wird allein oder in Mischung mit weiteren Phosphaten von Nebengruppenelementen aufgebracht, bevorzugt allein oder in Mischung mit Ni(II)phosphat und/oder Mn(II)phosphat.

### Dämpfungselement

Die Erfindung betrifft weiterhin ein Dämpfungselement, wobei das Dämpfungselement
(1) ein Kompositelement wie eingangs beschrieben umfassend
   a) einen metallischen Körper aufweisend eine Oberfläche;
   b) eine Beschichtung umfassend ein Epoxidharz auf mindestens einem Teil der Oberfläche des metallischen Körpers;
   c) einen Kunststoffkörper umfassend mindestens ein Polyurethan, welcher den metallischen Körper gemäß (a) zumindest teilweise umschließt und im Bereich der Umschließung zumindest teilweise in direktem Kontakt mit der Beschichtung gemäß (b) steht;
(2) mindestens einen weiteren Körper, welcher zumindest teilweise in direktem Kontakt mit dem Kompositelement gemäß (1), bevorzugt mit dem Kunststoffkörper gemäß (c), steht; umfasst.

In einer bevorzugten Ausführungsform des Dämpfungselements weist der mindestens eine weitere Körper eine Beschichtung (b') umfassend ein Epoxidharz auf mindestens einem Teil seiner Oberfläche auf. Die Beschichtung umfassend ein Epoxidharz gemäß (b) bzw. (b') auf mindestens einem Teil der Oberfläche des metallischen Körpers gemäß (a) bzw. auf mindestens einem Teil der Oberfläche des mindestens einen weiteren Körpers ist aufgebracht oder aufbringbar mittels eines Verfahrens ausgewählt aus der Gruppe bestehend aus Sprühen und Lackieren, bevorzugt Lackieren, weiter bevorzugt Tauchlackierung, weiter bevorzugt kathodischer Tauchlackierung. Auch der metallische Körper gemäß (a) des Dämpfungselements weist auf seiner Oberfläche keine Korrosionsschutzbeschichtung auf, d.h. es befindet sich auf seiner Oberfläche keine Eisen-Beschichtung (ZnFe) oder Zink-Nickel-Beschichtung (ZnNi). Die Beschichtung umfassend ein Epoxidharz gemäß (b) bzw. (b') ist somit direkt auf mindestens einem Teil der Oberfläche des metallischen Körpers gemäß (a) bzw. auf mindestens einem Teil der Oberfläche des mindestens einen weiteren Körpers aufgetragen.

Das Epoxidharz gemäß (b) bzw. (b') umfasst ein Epoxidharz, welches bevorzugt erhalten oder erhältlich ist aus einer wasserhaltigen Epoxidharz-Dispersion, welche bevorzugt mehr als 50 Gewichts-% Wasser, bezogen auf das Gesamtgewicht der wasserhaltigen Epoxidharz-Dispersion, aufweist. Die Epoxidharz-Dispersion umfasst ein Epoxidharz aufweisend Ammoniumgruppen wie oben zur Epoxidharz-Dispersion für das Kompositelement bereits beschrieben, d.h. für das Epoxidharz gemäß (b) bzw. (b') des Dämpfungselements wird das gleiche Epoxidharz bzw. die gleiche wasserhaltige Epoxidharz-Dispersion eingesetzt, wie sie oben bereits zum Kompositelement, insbesondere dort in der Sektion "Epoxidharz gemäß (b)" beschrieben ist. Auch beim Dämpfungselement weist die die Beschichtung gemäß (b) bzw. (b') eine Schichtdicke im Bereich von 1 bis 100 Mikrometer, bevorzugt im Bereich von 5 bis 60 Mikrometer, weiter bevorzugt im Bereich von 10 bis 50 Mikrometer, weiter bevorzugt im Bereich von 20 bis 40 Mikrometer, auf, bestimmt gemäß DIN EN ISO 2808; sowie eine Trockenfilmdichte im Bereich von 0,5 bis 5 g/cm³, bevorzugt im Bereich von 1 bis 2,5 g/cm³, weiter bevorzugt im Bereich von 1,1 bis 2,0 g/cm³, weiter bevorzugt im Bereich von 1,3 bis 1,4 g/cm³, bestimmt gemäß DIN 53219.

Das mindestens eine Polyurethan des Kunststoffkörpers gemäß (c) des Dämpfungselements ist ebenfalls erhalten oder erhältlich ist durch Umsetzung mindestens der Komponenten:
(iii) eine Polyisocyanatzusammensetzung;
(iv) eine Polyolzusammensetzung;
(v) optional eine Kettenverlängererzusammensetzung;
wobei die Polyisocyanatzusammensetzung gemäß (iii), die Polyolzusammensetzung gemäß (iv), und die Kettenverlängererzusammensetzung gemäß (iv) die gleichen sind wie bereits oben in der Sektion "Polyurethan des Kunststoffkörpers gemäß (c)" für das Kompositelement beschrieben sind. Auch beim Dämpfungselement liegt die die Polyisocyanatzusammensetzung (iii) bevorzugt in Form eines isocyanatterminierten Prepopylmers (iii.a), erhalten oder erhältlich aus der Umsetzung von Polyisocyanatzusammensetzung (iii) mit einem Teil der Polyolzusammensetzung (iv), vor, und das Polyurethan ist erhalten oder erhältlich ist durch Umsetzung von mindestens den Komponenten
(iii.a) isocyanatterminiertes Prepolymer;
(iv.a) verbliebener Teil der Polyolzusammensetzung (iv);
(v) optional Kettenverlängererzusammensetzung.

Gleichfalls gilt beim Dämpfungselement, dass das mindestens eine Polyurethan des Kunststoffkörpers gemäß (c) bevorzugt ein Polyurethangießelastomer oder ein Polyurethanschaum ist, weiter bevorzugt ein Polyurethangießelastomer. Auch in einer besonders bevorzugten Ausführungsform des Dämpfungselements st das Polyurethan des Kunststoffkörpers gemäß (c) ein Polyurethangießelastomer, welches erhalten oder erhältlich ist durch Umsetzung eines Prepolymers auf Basis von 4,4'-Diphenylmethan-diisocyanat, carbodiimidmodifiziertem 4,4'-MDI; linearem Polyesterdiol mit einer Hydroxylzahl im Bereich von 35 bis 120 mg KOH/g aufgebaut aus Adipinsäure, Ethylenglykol und 1,4-Butandiol und/oder einem verzweigtem Polyesterdiol mit einer Hydroxylzahl im Bereich von 35 bis 120 mg KOH/g, aufgebaut aus Adipinsäure, Ethylenglykol und 1,4-Butandiol; jeweils aufweisend einen NCO-Gehalt im Bereich von 10 bis 28 Gewichts-%; mit einem Polyol, welches bevorzugt ein lineares Polyesterdiol mit einer Hydroxylzahl im Bereich von 35 bis 120 mg KOH/g aufgebaut aus Adipinsäure, Ethylenglykol und 1,4-Butandiol umfasst, weiter bevorzugt ist; und wobei als Kettenverlängerer mindestens ein lineares aliphatisches Diol mit 2 bis 6 Kohlenstoffatomen, weiter bevorzugt mindestens 1,4-Butandiol, eingesetzt wird. Polyisocyanatkomponente, bevorzugt Prepolymer, und Polyolkomponente werden, bevorzugt vortemperiert auf Temperaturen im Bereich von 30 bis 70 °C, weiter bevorzugt im Bereich von 40 bis 60°C, zusammengeführt und anschließend als reaktives Gemisch bei einer Temperatur im Bereich von 80 bis 100 °C zur Reaktion gebracht. Bevorzugt erfolgt eine thermische Nachbehandlung für eine Zeitspanne von 24 bis 48 Stunden bei einer Temperatur im Bereich von 80 bis 100 °C.

Weiterhin umfasst auch beim Dämpfungselement der metallische Körper eine Eisenlegierung, bevorzugt Stahl, oder Aluminium umfasst. In einer Ausführungsform umfasst der metallische Körper eine Eisenlegierung, bevorzugt Stahl, bevorzugt besteht er zu mindestens 99 Gewichts-% aus Stahl, bezogen auf das Gesamtgewicht des metallischen Körpers. In einer weiteren Ausführungsform umfasst der metallische Körper Aluminium, bevorzugt besteht er zu mindestens 99 Gewichts-% aus Aluminium, bezogen auf das Gesamtgewicht des metallischen Körpers. Hinsichtlich der Form bestehen ebenfalls keine grundsätzlichen Beschränkungen für den metallischen Körper beim Dämpfungselement. Bevorzugt weist der metallische Körper des Dämpfungselements eine Form ausgewählt aus der Gruppe bestehend aus Scheibe, Lochscheibe, Ring, Zylinder und Hohlzylinder auf, wobei ein Hohlzylinder bevorzugt auch eine Hülse.

### Weiterer Körper

Das Dämpfungselement umfasst gemäß (2) mindestens einen weiteren Körper, welcher zumindest teilweise in direktem Kontakt mit dem Kompositelement gemäß (1), bevorzugt mit dem Kunststoffkörper gemäß (c), steht.

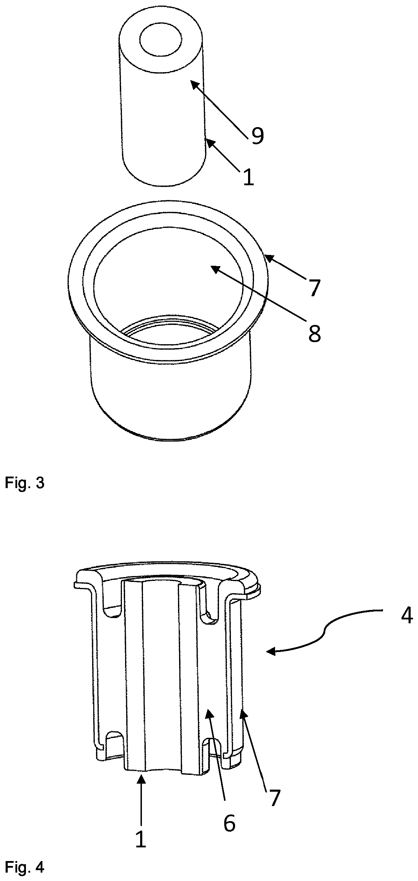

In einer bevorzugten Ausführungsform umfasst der mindestens eine weitere Körper einen metallischen Körper, bevorzugt besteht er aus einem metallischen Körper, wobei der metallische Körper bevorzugt eine Eisenlegierung, weiter bevorzugt Stahl, oder Aluminium, umfasst. Diese bevorzugte Ausführungsform des Dämpfungselements umfasst beispielsweise Rundlager, welche eine Innenhülse und eine Außenhülse aufweisen, wobei im finalen Rundlager dann die Innenhülse zumindest anteilig innerhalb der Außenhülse angeordnet ist und sich im Raum zwischen Innen- und Außenhülse dann der Kunststoffkörper gemäß (c) befindet. Bevorzugt in dieser Ausführungsform weist die Innenhülse, welche den metallischen Körper gemäß (a) darstellt, eine Beschichtung (b) umfassend ein Epoxidharz auf mindestens einem Teil ihrer äußeren Oberfläche auf; die äußere Oberfläche der Innenhülse ist hierbei die der Außenhülse zugewandte Oberfläche. Die Beschichtung (b) umfassend ein Epoxidharz befindet sich hierbei zumindest auf einem Teil der äußeren Oberfläche der Innenhülse, welche bei Anordnung im Rundlager innerhalb der Außenhülse angeordnet ist. Bevorzugt in dieser Ausführungsform weist die Außenhülse, welche den weiteren Körper gemäß (2) darstellt und einen metallischen Körper umfasst, bevorzugt ein metallischer Körper ist, die Beschichtung gemäß (b') umfassend ein Epoxidharz auf mindestens einem Teil ihrer inneren Oberfläche auf; die innere Oberfläche der Außenhülse ist hierbei die der Innenhülse bei Anordnung im Rundlager zugewandte Oberfläche. Beispielhaft gezeigt sind ein solches Rundlager bzw. Innen- und Außenhülse in den Figuren 3 und 4.

### Zelliges Polyurethan des weiteren Körpers

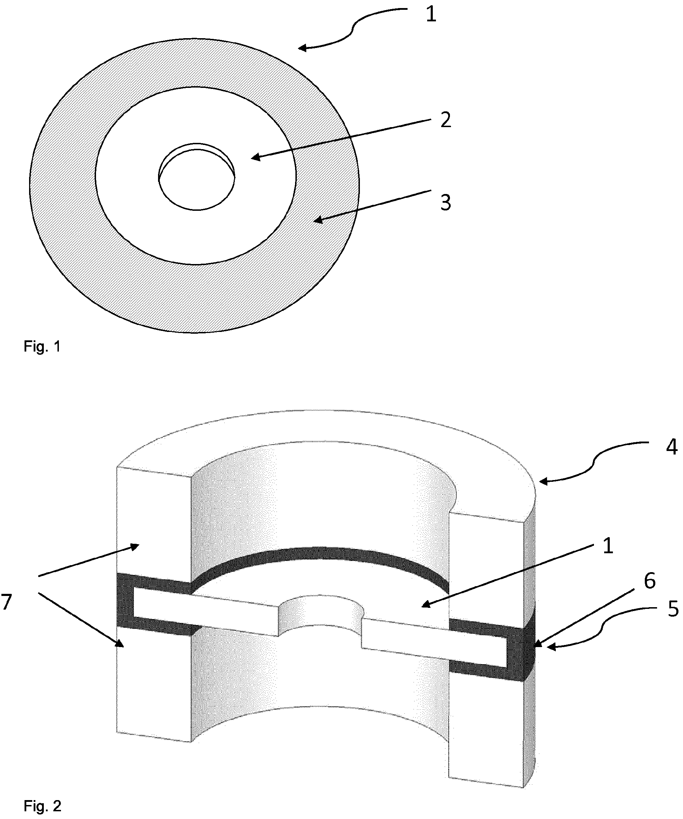

In einer alternativen bevorzugten Ausführungsform des Dämpfungselement umfasst der mindestens eine weitere Körper ein Polyurethan, bevorzugt ein zelliges Polyurethan, bevorzugt ein zelliges Polyurethan aufweisend eine Dichte im Bereich von 200 bis 1100 kg/m³, weiter bevorzugt eine Dichte im Bereich von 200 bis 750 kg/m³. Weiter bevorzugt besteht in dieser Ausführungsform der weitere Körper aus dem zelligen Polyurethan. Diese bevorzugte Ausführungsform des Dämpfungselements umfasst beispielsweise Dämpfungselemente für ein Dämpfungslager (Top Mount), wie sie beispielhaft in Fig. 1 und 2 gezeigt sind. Der metallische Körper gemäß (a) des Dämpfungselements weist hier bevorzugt eine Ring- bzw. Lochscheibenform mit zentralem Loch auf. Der weitere Körper gemäß (2) weist bevorzugt die Form eines Hohlzylinders bzw. Rings auf.

Das zellige Polyurethan des weiteren Körpers gemäß (2) ist bevorzugt erhalten oder erhältlich durch Umsetzung mindestens der Komponenten Isocyanatzusammensetzung, gegenüber Isocyanaten reaktiver Verbindung, Wasser und optional Polisiloxanzusammensetzung und optional Fettsäuresulfonate. Zellige Polyurethane (zP), wie sie im Rahmen dieser Erfindung eingesetzt werden, sind beschrieben in EP 1 379 588 B1 und EP 1 171 515 B1. Sie sind erhalten oder erhältlich durch Umsetzung von (zP.a) Isocyanaten mit (zP.b) gegenüber Isocyanaten reaktiven Verbindungen sowie (d) Wasser, wobei als (zP.b) in einer bevorzugten Ausführungsform ein Polyester mit 2 Hydroxylgruppen, basierend auf der Kondensation mindestens einer Dicarbonsäure mit 2-Methyl-propan-1,3-diol, eingesetzt wird. Der Polyester mit zwei Hydroxylgruppen kann durch allgemein bekannte Verfahren zur Kondensation üblicherweise bei erhöhter Temperatur und vermindertem Druck in bekannten Apparaturen bevorzugt in Gegenwart üblicher Katalysatoren hergestellt werden. Beispielsweise können die organischen Dicarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon u.a., in der Schmelze bei Temperaturen von 150 bis 250°C, vorzugsweise 180 bis 220 °C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.

Zur Herstellung der Polyester mit 2 Hydroxylgruppen werden die organischen Polycarbonsäuren und/oder-derivate und Diole bevorzugt im Molverhältnis von Dicarbonsäure zu Diol von 1 : 1,01 bis 1 : 1,8, vorzugsweise 1 : 1,05 bis 1 : 1,2, polykondensiert. Als Dicarbonsäuren können allgemein bekannte aliphatische Dicarbonsäuren, wie Bernsteinsäure, Glutarsäure, Adipinsäure, Korksäure, Azelainsäure und Sebacinsäure und/oder aromatische Dicarbonsäuren, wie Phthalsäure, Isophthalsäure und Terephthalsäure Verwendung finden. Die Dicarbonsäuren können einzeln oder als Gemische verwendet werden. Zur Herstellung der Polyesterpolyole kann es gegebenenfalls vorteilhaft sein, anstelle der Carbonsäure die entsprechenden Carbonsäurederivate, wie Carbonsäureester mit 1 bis 4 Kohlenstoffatomen im Alkoholrest, Carbonsäureanhydride oder Carbonsäurechloride zu verwenden. Besonders bevorzugt wird Adipinsäure zur Kondensation mit dem Diolgemisch verwendet. Die Polyester mit 2 Hydroxylgruppen weisen bevorzugt ein Molekulargewicht von 500 bis 6000 g/mol, bevorzugt 1000 bis 3000 g/mol auf. Das Molekulargewicht ist bevorzugt das zahlenmittlere Molekulargewicht. Das zellige Polyurethan ist bevorzugt erhalten oder erhältlich durch Umsatz der Komponenten (zP.a) Isocyanat, (zP.b) gegenüber Isocyanaten reaktive Verbindung, (c) gegebenenfalls Kettenverlängerung- und/oder Vernetzungsmittel, (zP.d) Wasser, und gegebenenfalls (zP.e) Katalysatoren, (zP.f) Treibmittel und/oder (zP.g) Hilfsstoffe; in einem ein- oder zweistufigen Prozess. Bevorzugt wird in einer ersten Stufe ein Isocyanatgruppen aufweisendes Prepolymer herstellt und dieses Prepolymer in der zweiten Stufe in einer Form mit einer Vernetzerkomponente enthaltend Wasser (zP.d) umsetzt, wobei (zP.e) und gegebenenfalls (zP.f) und/oder (zP.g) in dem Prepolymer und/oder der Vernetzerkomponente enthalten sein können. Die Vernetzerkomponente kann dabei als (zP.g) ein Carbodiimid enthalten. Als weitere Komponenten können wie in EP 1 171 515 B1 beschrieben Polysiloxane und maximal 1 Gewichts-%, bevorzugt 0 bis 0,9 Gewichts-%, sulfonierten Fettsäuren, bezogen auf das Gewicht der zelligen Polyisocyanat-Polyadditionsprodukte, zugesetzt werden. Als Polysiloxane können allgemein bekannte Verbindungen eingesetzt werden, beispielsweise Polymethylsiloxane, Polydimethylsiloxane und/oder Polyoxyalkylen-Silikon-Copolymere; weitere Details zu den eingesetzten Polysiloxanen sind in EP 1 171 515 B1 beschrieben. Als Fettsäuresulfonate können allgemein bekannte sulfonierte Fettsäuren, die auch kommerziell erhältlich sind, eingesetzt werden. Bevorzugt wird als Fettsäuresulfonat sulfoniertes Rizinusöl eingesetzt; wobei Details hierzu in EP 1 171 515 B1 beschrieben sind.

Als Isocyanate (zP.a) des zelligen Polyurethans können allgemein bekannte (cyclo)aliphatische und/oder aromatische Polyisocyanate eingesetzt werden. Besonders eignen sich aromatische Diisocyanate, vorzugsweise 2,2'-, 2,4'- und/oder 5 4,4'-Diphenylmethandiisocyanat (MDI) 1,5-Naphthylendiisocyanat (NDI), 2,4- und/oder 2,6-Toluylendiisocyanat (TDI), 3,3'-Dimethyldiphenyl-diisocyanat, 1,2-Diphenylethandiisocyanat, Phenylendiisocyanat und/oder (cyclo)aliphatische Isocyanate wie z.B. 1,6-Hexamethylendiisocyanat,1-Isocyanato-3,3,5-trimethyl-5 isocyanatomethylcyclohexan und/oder Polyisocyanate wie z.B. Polyphenylpolymethylenpolyisocyanate. Die Isocyanate können in Form der reinen Verbindung, in Mischungen und/oder in modifizierter Form, beispielsweise in Form von Uretdionen, Isocyanuraten, Allophanaten oder Biureten, vorzugsweise in Form von Urethan- und Isocyanatgruppen enthaltenden Umsetzungsprodukten, sogenannten Isocyanat-Prepolymeren, eingesetzt werden. Bevorzugt werden gegebenenfalls modifiziertes 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI) und/oder Mischungen dieser Isocyanate eingesetzt, weiter bevorzugt ggf. modifiziertes MDI oder NDI oder eine Mischung aus MDI und NDI. Details zu den eingesetzten Isocyanaten und deren Einsetzung sind in EP 1 171 515 B1 beschrieben.

Als gegenüber Isocyanaten reaktive Verbindungen (zP.b) können allgemein bekannte Polyhydroxylverbindungen eingesetzt werden, bevorzugt solche mit einer Funktionalität von 2 bis 3 und bevorzugt einem Molekulargewicht von 60 bis 6000, besonders bevorzugt 500 bis 6000, insbesondere 800 bis 3500. Bevorzugt werden als (zP.b) Polyetherpolyole, Polyesterpolyalkohole und/oder hydroxylgruppenhaltige Polycarbonate eingesetzt. Bevorzugt werden als (zP.b) Polyesterpolyalkohole, im Folgenden auch als Polyesterpolyole bezeichnet, eingesetzt. Geeignete Polyesterpolyole können beispielsweise aus Dicarbonsäuren mit 2 bis 12 Kohlenstoffatomen und zweiwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische verwendet werden. Zur Herstellung der Polyesterpolyole kann es gegebenenfalls vorteilhaft sein, anstelle der Carbonsäure die entsprechenden Carbonsäurederivate, wie Carbonsäureester mit 1 bis 4 Kohlenstoffatomen im Alkoholrest, Carbonsäureanhydride oder Carbonsäurechloride zu verwenden. Beispiele für zweiwertige Alkohole sind Glykole mit 2 bis 16 Kohlenstoffatomen, vorzugsweise 2 bis 6 Kohlenstoffatome, wie z. B. Ethylenglykol, Diethylenglykol, Butandiol-1,4, Pentandiol-1,5, Hexandiol-1,6, Decandiol-1,10, 2-Methylpropan-1,3-diol, 2,2-Dimethylpropandiol-1,3, Propandiol-1,3 und Dipropylenglykol. Je nach den gewünschten Eigenschaften können die zweiwertigen Alkohole allein oder gegebenenfalls in Mischungen untereinander verwendet werden. Als Polyesterpolyole vorzugsweise verwendet werden Ethandiolpolyadipate, 1,4-Butandiol-polyadipate, Ethandiol-butandiol-polyadipate, 1,6-Hexandiol-neopentylglykolpolyadipate, 1,6-Hexandiol-1,4-Butandiol-polyadipate, 2-Methyl-1,3-propandiol-1,4-butandiol-polyadipate und/oder Polycaprolactone, wobei 2-Methyl-1,3-propandiol-1,4-butandiol-polyadipate besonders bevorzugt sind. Geeignete estergruppenhaltige Polyoxyalkylenglykole, im wesentlichen Polyoxytetramethylenglykole, sind Polykondensate aus organischen, vorzugsweise aliphatischen Dicarbonsäuren, insbesondere Adipinsäure mit Polyoxymethylenglykolen des zahlenmittleren Molekulargewichtes von 162 bis 600 und gegebenenfalls aliphatischen Diolen, insbesondere Butandiol-1,4. Ebenfalls geeignete estergruppenhaltige Polyoxytetramethylenglykole sind solche aus der Polykondensation mit e-Caprolacton gebildete Polykondensate. Geeignete carbonatgruppenhaltige Polyoxyalkylenglykole, im wesentlichen Polyoxytetramethylenglykole, sind Polykondensate aus diesen mit Alkyl- bzw. Arylcarbonaten oder Phosgen. Details zu den eingesetzten gegenüber Isocyanaten reaktiven Komponenten und deren Einsetzung sind in EP 1 171 515 B1 beschrieben. Zusätzlich zu den bereits beschriebenen gegenüber Isocyanaten reaktiven Komponenten können des weiteren niedermolekulare Kettenverlängerungs- und/oder Vernetzungsmitteln (zP.b1) mit einem Molekulargewicht von kleiner 500, bevorzugt 60 bis 499 eingesetzt werden, beispielsweise ausgewählt aus der Gruppe der di- und/oder trifunktionellen Alkohole, di- bis tetrafunktionellen Polyoxyalkylen-polyole und der alkylsubstituierten aromatischen Diamine oder von Mischungen aus mindestens zwei der genannten Kettenverlängerungs- und/oder Vernetzungsmittel. Als (zP.b1) können beispielsweise Alkandiole mit 2 bis 12, bevorzugt 2, 4, oder 6 Kohlenstoffatomen verwendet werden, z.B. Ethan-, 1,3-Propan-, 1,5-Pentan-, 1,6-Hexan-, 1, 7 -Heptan-, 1,8-0ctan-, 1,9-Nonan-, 1,1 0-Decandiol und vorzugsweise 1,4-Butandiol, 5 Dialkylenglykole mit 4 bis 8 Kohlenstoffatomen, wie z.B. Diethylenglykol und Dipropylenglykol und/oder di- bis tetrafunktionelle Polyoxyalkylen-polyole. Weitere Details zu den niedermolekulare Kettenverlängerungs- und/oder Vernetzungsmitteln (zP.b1) sind in EP 1 171 515 B1 beschrieben, ebenso sind dort die Details zu den (zP.e) Katalysatoren, (zP.f) Treibmittel und/oder (zP.g) Hilfsstoffe zu finden.

In einer bevorzugten Ausführungsform ist das zellige Polyurethan des weiteren Körpers gemäß (2) bevorzugt erhalten oder erhältlich durch Umsetzung mindestens der Komponenten Isocyanatzusammensetzung, welche mindestens MDI oder NDI oder eine Mischung aus MDI und MDI, umfasst; gegenüber Isocyanaten reaktiver Verbindung, welche mindestens einen Polyester mit 2 Hydroxylgruppen, basierend auf der Kondensation mindestens einer Dicarbonsäure, bevorzugt Adipinsäure, mit mindestens 2-Methyl-propan-1,3-diol und ggf. mindestens einem weiteren Diol, bevorzugt 1,4-Butandiol; Wasser und optional Polisiloxanzusammensetzung und optional Fettsäuresulfonate.

Hinsichtlich des Wassers (zP.d) betragen die Wassermengen, die zweckmäßigerweise verwendet werden, 0,01 bis 5 Gewichts-%, vorzugsweise 0,3 bis 3,0 Gewichts-%, bezogen auf das Gewicht der Komponente (zP.b). Das Wasser kann vollständig oder teilweise in Form der wässrigen Lösungen der sulfonierten Fettsäuren eingesetzt werden. Zur Beschleunigung der Reaktion können dem Reaktionsansatz sowohl bei der Herstellung eines Prepolymeren als auch gegebenenfalls bei der Umsetzung eines Prepolymeren mit einer Vernetzerkomponente allgemein bekannte Katalysatoren (f) zugefügt werden. Die Katalysatoren (zP.f) können einzeln wie auch in Abmischung miteinander zugegeben werden. Vorzugsweise sind dies metallorganische Verbindungen, wie Zinn-(11)-Salze von organischen Carbonsäuren, z. B. Zinn-(11)-dioctoat, Zinn-(11)-dilaurat, Dibutylzinndiacetat und Dibutylzinndilaurat und tertiäre Amine wie Tetramethylethylendiamin, N-Methylmorpholin, Diethylbenzylamin, Triethylamin, Dimethylcyclohexylamin, Diazabi- cyclooctan, N,N'-Dimethylpiperazin, N-Methyl,N'-(4-N-Dimethylamino-)Butylpiperazin, N,N,N',N",N"-Pentamethyl-diethylentriamin oder ähnliche. Weiterhin kommen als Katalysatoren in Betracht: Amidine, wie z.B. 2,3-Dimethyl-3,4,5,6-tetrahydropyrimidin, Tris-(dialkylaminoalkyl)-s-hexahydrotriazine, insbesondere Tris-(N,N-dimethylaminopropyl)-s-hexahydrotriazin, Tetra- alkylammoniumhydroxide, wie z.B. Tetramethylammoniumhydroxid, Alkalihydroxide, wie z.B. Natriumhydroxid, und Alkalialkoholate, wie z.B. Natriummethylat und Kaliumisopropylat, sowie Alkalisalze von langkettigen Fettsäuren mit 10 bis 20 C-Atomen und gegebenenfalls seitenständigen OH-5 Gruppen. Je nach einzustellender Reaktivität gelangen die Katalysatoren (zP.f) in Mengen von 0,001 bis 0,5 Gewichts-%, bezogen auf das Prepolymere, zur Anwendung. Gegebenenfalls können in der Polyurethanherstellung übliche Treibmittel (zP.g) verwendet werden. Geeignet sind beispielsweise niedrig siedende Flüssigkeiten, die unter dem Einfluß der exothermen Polyadditionsreaktion verdampfen. Geeignet sind Flüssigkeiten, welche gegenüber dem organischen Polyisocyanat inert sind und Siedepunkte unter 100 °C aufweisen. Beispiele derartiger, vorzugsweise verwendeter Flüssigkeiten sind halogenierte, vorzugsweise fluorierte Kohlenwasserstoffe, wie z.B. Methylenchiarid und Dichlormonofluormethan, per-oder partiell fluorierte Kohlenwasserstoffe, wie z.B. Trifluormethan, Difluormethan, Difluorethan, Tetrafluorethan und Heptafluorpropan, Kohlenwasserstoffe, wie z.B. n- und iso-Butan, n- und iso-Pentan sowie die technischen Gemische dieser Kohlenwasserstoffe, Propan, Propylen, Hexan, Heptan, Cyclobutan, Cyclopentan und Cyclohexan, Dialkylether, wie z.B. Dimethylether, Diethylether und Furan, Carbonsäureester, wie z.B. Methyl- und Ethylformiat, Ketone, wie z.B. Aceton, und/oder fluorierte und/oder perfluorierte, tertiäre Alkylamine, wie z.B. Perfluor-dimethyl-iso-propylamin. Auch Gemische dieser niedrigsiedenden Flüssigkeiten untereinander und/oder mit anderen substituierten oder unsubstituierten Kohlenwasserstoffen können verwendet werden. Die zweckmäßigste Menge an niedrigsiedender Flüssigkeit zur Herstellung derartiger zelliger Polyurethane hängt ab von der Dichte, die man erreichen will, sowie von der Menge des bevorzugt mit verwendeten Wassers. Im allgemeinen liefern Mengen von 1 bis 15 Gewichts-%, vorzugsweise 2 bis 11 Gewichts-%, bezogen auf das Gewicht der Komponente (zP.b), zufriedenstellende Ergebnisse. Besonders bevorzugt wird ausschließlich Wasser (zP.e) als Treibmittel eingesetzt. Details zu weiteren eingesetzten Hilfsstoffen (zP.h) sind der EP 1 171 515 B1 zu entnehmen, insbesondere Absatz [0060].

Das Dämpfungselement weist zwischen der Oberfläche des metallischen Körpers (a) und der Beschichtung (b) eine Konversionsschicht (d) auf, welche mindestens eine Verbindung ausgewählt aus der Gruppe von Zirkon(IV)oxid, Zink(II)phosphat und Chromat, bevorzugt mindestens Zirkon(IV)oxid und/oder Zinkphosphat, weiter bevorzugt mindestens Zirkon(IV)oxid, umfasst. Bevorzugte Ausführungsformen hierzu sind oben bereits zum Kompositelement beschrieben; diese gelten hier analog.

### Herstellungsverfahren - Kompositelement

Die vorliegende Erfindung betrifft ebenso ein Verfahren zur Herstellung eines Kompositelements, wobei das Kompositelement
a) mindestens einen metallischen Körper aufweisend eine Oberfläche;
b) eine Beschichtung umfassend ein Epoxidharz auf mindestens einem Teil der Oberfläche des metallischen Körpers;
c) einen Kunststoffkörper umfassend mindestens ein Polyurethan, welcher den metallischen Körper gemäß (a) zumindest teilweise umschließt und im Bereich der Umschließung zumindest teilweise in direktem Kontakt mit der Beschichtung gemäß (b) steht; umfasst;
umfassend
I) Bereitstellen mindestens eines metallischen Körpers aufweisend eine Oberfläche und eine Beschichtung umfassend ein Epoxidharz auf mindestens einem Teil der Oberfläche des metallischen Körpers;
II) Einbetten des beschichteten metallischen Körpers gemäß (I) in eine Kunststoffzusammensetzung umfassend mindestens ein Polyurethan, wobei der beschichtete metallische Körper zumindest teilweise von der Kunststoffzusammensetzung umschlossen wird und diese im Bereich der Umschließung zumindest teilweise in direktem Kontakt mit der Beschichtung gemäß (b) gelangt.

Bevorzugt ist die Beschichtung gemäß (b) direkt auf der Oberfläche des metallischen Körpers gemäß (a) vorhanden, d.h. der metallische Körper weist auf seiner Oberfläche keine Korrosionsschutzbeschichtung auf, beispielsweise keine Eisen-Beschichtung (ZnFe) oder Zink-Nickel-Beschichtung (ZnNi). Die Beschichtung umfassend ein Epoxidharz gemäß (b) ist somit direkt auf mindestens einem Teil der Oberfläche des metallischen Körpers gemäß (a) aufgetragen. Hinsichtlich der einzelnen Bestandteile gilt das gleiche für das Verfahren zur Herstellung des Kompositelements, wie voranstehend bereits zum Kompositelement selbst beschrieben.

In einer Ausführungsform des Verfahrens zur Herstellung eines Kompositelements weist das Kompositelement zwischen der Oberfläche des metallischen Körpers (a) und der Beschichtung (b) eine Konversionsschicht (d) auf, welche mindestens eine Verbindung ausgewählt aus der Gruppe von Zirkon(IV)oxid, Zink(II)phosphat und Chromat, bevorzugt mindestens Zirkon(IV)oxid und/oder Zinkphosphat, weiter bevorzugt mindestens Zirkon(IV)oxid, umfasst; bzw. gemäß (I) mindestens eines metallischen Körpers aufweisend eine Oberfläche und eine Beschichtung umfassend ein Epoxidharz auf mindestens einem Teil der Oberfläche des metallischen Körpers bereitgestellt wird, wobei sich zwischen der Oberfläche des metallischen Körpers (a) und der Beschichtung (b) eine Konversionsschicht (d) aufweist, welche mindestens eine Verbindung ausgewählt aus der Gruppe von Zirkon(IV)oxid, Zink(II)phosphat und Chromat, bevorzugt mindestens Zirkon(IV)oxid und/oder Zinkphosphat, weiter bevorzugt mindestens Zirkon(IV)oxid, umfasst. Bevorzugte Ausführungsformen hierzu sind oben bereits zum Kompositelement beschrieben; diese gelten hier analog.

### Herstellungsverfahren - Dämpfungselement

Die Erfindung betrifft weiterhin ein Verfahren zur Herstellung eines Dämpfungselements umfassend
(1) ein Kompositelement umfassend
   a) mindestens einen metallischen Körper aufweisend eine Oberfläche;
   b) eine Beschichtung umfassend ein Epoxidharz auf mindestens einem Teil der Oberfläche des metallischen Körpers;
   c) einen Kunststoffkörper umfassend mindestens ein Polyurethan, welcher den metallischen Körper gemäß (a) zumindest teilweise umschließt und im Bereich der Umschließung zumindest teilweise in direktem Kontakt mit der Beschichtung gemäß (b) steht;
(2) mindestens einen weiteren Körper, welcher zumindest teilweise in direktem Kontakt mit dem Kompositelement gemäß (1), bevorzugt mit dem Kunststoffkörper gemäß (c), steht;
umfassend
III) Bereitstellen eines Kompositelements (1) und mindestens eines weiteren Körpers (2);
IV) zumindest anteiliges in Kontaktbringen und gegebenenfalls Verbinden von Kompositelement (1) und dem mindestens einen weiteren Körper (2) über eine Außenfläche des Kompositelements (1) und eine Außenfläche des mindestens einen weiteren Körpers (2).

In einer bevorzugten Ausführungsform des Verfahrens zur Herstellung eines Dämpfungselements weist der weitere Körper eine Beschichtung umfassend ein Epoxidharz auf mindestens einem Teil seiner Oberfläche auf, wobei das Epoxidharz bevorzugt erhalten oder erhältlich ist aus einer wasserhaltigen Epoxidharz-Dispersion, welche bevorzugt mehr als 50 Gewichts-% Wasser, bezogen auf das Gesamtgewicht der wasserhaltigen Epoxidharz-Dispersion, aufweist. Bevorzugt ist die Beschichtung gemäß (b) direkt auf der Oberfläche des metallischen Körpers gemäß (a) vorhanden, d.h. der metallische Körper weist auf seiner Oberfläche keine Korrosionsschutzbeschichtung auf, beispielsweise keine Eisen-Beschichtung (ZnFe) oder Zink-Nickel-Beschichtung (ZnNi). Die Beschichtung umfassend ein Epoxidharz gemäß (b) ist somit direkt auf mindestens einem Teil der Oberfläche des metallischen Körpers gemäß (a) aufgetragen. Hinsichtlich der einzelnen Bestandteile gilt das gleiche für das Verfahren zur Herstellung des Dämpfungselements, wie voranstehend bereits zum Kompositelement selbst beschrieben.

Gemäß einer Ausführungsform des Verfahrens zur Herstellung eines Dämpfungselements weist das Kompositelement (1) zwischen der Oberfläche des metallischen Körpers (a) und der Beschichtung (b) eine Konversionsschicht (d) auf, welche mindestens eine Verbindung ausgewählt aus der Gruppe von Zirkon(IV)oxid, Zink(II)phosphat und Chromat, bevorzugt mindestens Zirkon(IV)oxid und/oder Zinkphosphat, weiter bevorzugt mindestens Zirkon(IV)oxid, umfasst und/oder, bevorzugt und, der weitere Körper zwischen seiner Oberfläche und der Beschichtung umfassend ein Epoxidharz eine Konversionsbeschichtung aufweist, welche mindestens eine Verbindung ausgewählt aus der Gruppe von Zirkon(IV)oxid, Zink(II)phosphat und Chromat, bevorzugt mindestens Zirkon(IV)oxid und/oder Zinkphosphat, weiter bevorzugt mindestens Zirkon(IV)oxid, umfasst. Bevorzugte Ausführungsformen hierzu sind oben bereits zum Kompositelement beschrieben; diese gelten hier analog.

Eine bevorzugte Ausführungsform des Verfahrens zur Herstellung eines Dämpfungselements umfassend
(1) ein Kompositelement umfassend
   a) mindestens einen metallischen Körper aufweisend eine Oberfläche;
   b) eine Beschichtung umfassend ein Epoxidharz auf mindestens einem Teil der Oberfläche des metallischen Körpers;
   c) einen Kunststoffkörper umfassend mindestens ein Polyurethan, welcher den metallischen Körper gemäß (a) zumindest teilweise umschließt und im Bereich der Umschließung zumindest teilweise in direktem Kontakt mit der Beschichtung gemäß (b) steht;
(2) mindestens einen weiteren Körper, welcher zumindest teilweise in direktem Kontakt mit dem Kompositelement gemäß (1), bevorzugt mit dem Kunststoffkörper gemäß (c), steht;
umfasst:
II.1) Einbringen des metallischen Körpers aufweisend eine Oberfläche und eine Beschichtung umfassend ein Epoxidharz auf mindestens einem Teil der Oberfläche des metallischen Körpers in eine Form, bevorzugt eine Gußform,
II.2) Einbringen des weiteren Körpers in die Form, bevorzugt in die Gußform, wobei ein Teil der Form, bevorzugt zwischen metallischem Körper gemäß (II.1) und weiterem Körper, leer verbleibt;
II.3) Einbringen der Kunststoffzusammensetzung in den leer verbliebenen Teil der Form aus (II.2).

In einer bevorzugten Ausführungsform des Verfahrens zur Herstellung eines Dämpfungselements umfasst (II.1):
II.1.1) Bereitstellen mindestens eines metallischen Körpers aufweisend eine Oberfläche;
II.1.2) Aufbringen einer Beschichtung umfassend ein Epoxidharz gemäß auf mindestens einem Teil der Oberfläche des metallischen Körpers, bevorzugt mittels eines Verfahrens ausgewählt aus der Gruppe bestehend aus Sprühen und Lackieren, bevorzugt Tauchlackierung, weiter bevorzugt mittels kathodischer Tauchlackierung,
unter Erhalt eines metallischen Körper aufweisend eine Oberfläche und eine Beschichtung umfassend ein Epoxidharz auf mindestens einem Teil der Oberfläche des metallischen Körpers.

Bevorzugt wird hierbei die Beschichtung gemäß (b) direkt auf der Oberfläche des metallischen Körpers gemäß (a) aufgebracht, d.h. der metallische Körper weist auf seiner Oberfläche keine Korrosionsschutzbeschichtung auf, beispielsweise keine Eisen-Beschichtung (ZnFe) oder Zink-Nickel-Beschichtung (ZnNi). Das Aufbringen gemäß II.1.2) erfolgt somit direkt auf der Oberfläche des metallischen Körpers gemäß (a), besonders bevorzugt wird zwischen II.1.1) und II.1.2) auch kein weiterer Beschichtungsschritt durchgeführt. Hinsichtlich der einzelnen Bestandteile gilt das gleiche für das Verfahren, wie voranstehend bereits zum Kompositelement selbst beschrieben.

Gemäß einer Ausführungsform des Verfahrens zur Herstellung eines Dämpfungselements weist das Kompositelement (1) zwischen der Oberfläche des metallischen Körpers (a) und der Beschichtung (b) eine Konversionsschicht (d) auf, welche mindestens eine Verbindung ausgewählt aus der Gruppe von Zirkon(IV)oxid, Zink(II)phosphat und Chromat, bevorzugt mindestens Zirkon(IV)oxid und/oder Zinkphosphat, weiter bevorzugt mindestens Zirkon(IV)oxid, umfasst; bzw. wobei (II.1.2) umfasst:
II.1.2.1) Aufbringen einer Beschichtung auf mindestens einem Teil der Oberfläche des metallischen Körpers, welche mindestens eine Verbindung ausgewählt aus der Gruppe von Zirkon(IV)oxid, Zink(II)phosphat und Chromat, bevorzugt mindestens Zirkon(IV)oxid und/oder Zinkphosphat, weiter bevorzugt mindestens Zirkon(IV)oxid, umfasst, unter Erhalt einer Konversionsbeschichtung auf mindestens einem Teil der Oberfläche des metallischen Körpers;
II.1.2.2) Aufbringen einer Beschichtung umfassend ein Epoxidharz gemäß auf mindestens einem Teil der gemäß (II.1.2.1) erhaltenen Konversionsbeschichtung mittels eines Verfahrens ausgewählt aus der Gruppe bestehend aus Sprühen und Lackieren, bevorzugt Tauchlackierung, weiter bevorzugt mittels kathodischer Tauchlackierung.

In einer bevorzugten Ausführungsform des Verfahrens zur Herstellung eines Dämpfungselements nachweist der weitere Körper eine Beschichtung umfassend ein Epoxidharz auf mindestens einem Teil seiner Oberfläche auf, wobei (II.2) bevorzugt umfasst:
II.2.1) Bereitstellen mindestens eines weiteren Körpers aufweisend eine
   Oberfläche, bevorzugt mindestens eines weiteren Körpers umfassend eine Eisenlegierung oder Aluminium;
II.2.2) Aufbringen einer Beschichtung umfassend ein Epoxidharz gemäß auf mindestens einem Teil der Oberfläche des weiteren Körpers, bevorzugt mittels eines Verfahrens ausgewählt aus der Gruppe bestehend aus Sprühen und Lackieren, weiter bevorzugt Tauchlackierung, weiter bevorzugt mittels kathodischer Tauchlackierung,
unter Erhalt eines weiteren Körper aufweisend eine Oberfläche und eine Beschichtung umfassend ein Epoxidharz auf mindestens einem Teil seiner Oberfläche; wobei bevorzugt der weitere Körper zwischen seiner Oberfläche und der Beschichtung umfassend ein Epoxidharz eine Konversionsbeschichtung aufweist, welche mindestens eine Verbindung ausgewählt aus der Gruppe von Zirkon(IV)oxid, Zink(II)phosphat und Chromat, bevorzugt mindestens Zirkon(IV)oxid und/oder Zinkphosphat, weiter bevorzugt mindestens Zirkon(IV)oxid, umfasst.

Bevorzugt wird hierbei die Beschichtung gemäß (b) direkt auf der Oberfläche des auf des weiteren Körpers aufgebracht, d.h. der weitere Körper weist auf seiner Oberfläche keine Korrosionsschutzbeschichtung auf, beispielsweise keine Eisen-Beschichtung (ZnFe) oder Zink-Nickel-Beschichtung (ZnNi). Das Aufbringen gemäß II.2.2) erfolgt somit direkt auf der Oberfläche des weiteren Körpers, besonders bevorzugt wird zwischen II.2.1) und II.2.2) auch kein weiterer Beschichtungsschritt durchgeführt. Hinsichtlich der einzelnen Bestandteile gilt das gleiche für das Verfahren, wie voranstehend bereits zum Kompositelement selbst beschrieben.

Bevorzugt umfasst das gemäß (II.1.2) bzw. gemäß (II.2.2) verwendete Epoxidharz ein Epoxidharz, welches bevorzugt erhalten oder erhältlich ist aus einer wasserhaltigen Epoxidharz-Dispersion, welche bevorzugt mehr als 50 Gewichts-% Wasser, bezogen auf das Gesamtgewicht der wasserhaltigen Epoxidharz-Dispersion, aufweist. Die Epoxidharz-Dispersion, welche ein Epoxidharz aufweisend Amminogruppen umfasst, ist bevorzugt erhalten oder erhältlich durch
A) Umsetzung mindestens der Komponenten
   i) ein Vorprodukt, welches unter Zusatz von Phosphinen und/oder Phosphinsalzen als Katalysator hergestellt oder herstellbar ist aus
      i.a) mindestens einer Diepoxidverbindung;
      i.b) mindestens einem Mono- oder Diphenol oder einer Mischung aus einem Mono- und einem Diphenol;
   ii) mindestens einem organischen Amin; bei einer Zugabetemperatur im Bereich von 60 bis 130°C zu einem Epoxid-Amin-Addukt;
B) anschließende oder gleichzeitige Umsetzung der sekundären Hydroxylgruppen, die bei der Umsetzung der Komponenten i.a) und i.b) gebildet worden sind, mit Epoxidgruppen des in Stufe A) hergestellten Epoxid-Amin-Adduktes bei einer Temperatur von 110 bis 150°C,
C) Zusatz mindestens eines Vernetzungsmittels bei einer Temperatur von <150°C,
D) Neutralisierung;
E) Dispergierung der in den Stufen A) bis D) erhaltenen Mischung in Wasser.

Die Epoxidharz-Dispersion umfassend ein Epoxidharz aufweisend Ammoniumgruppen bzw. das Epoxidharzs sind die gleichen wie oben zur Epoxidharz-Dispersion für das Kompositelement bereits beschrieben, d.h. für das Aufbringen der Beschichtung auf dem metallischen Körper gemäß (c) bzw. der Beschichtung gemäß (II.1.2) bzw. (II.2.2) im Rahmen des Dämpfungselements wird das gleiche Epoxidharz bzw. die gleiche wasserhaltige Epoxidharz-Dispersion eingesetzt, wie sie oben bereits zum Kompositelement, insbesondere dort in der Sektion "Epoxidharz gemäß (b)" beschrieben ist.

Für das Aufbringen der Beschichtung auf dem metallischen Körper gemäß (c) bzw. der Beschichtung gemäß (II.1.2) bzw. (II.2.2) im Rahmen des Dämpfungselements wird bevorzugt eine kathodische Tauchlackierung eingesetzt, wobei die angelegte Spannung bevorzugt im Bereich von 50 bis 500 Volt, weiter bevorzugt im Bereich von 100 bis 400 Volt, weiter bevorzugt im Bereich von 200 bis 350 Volt, liegt. Die Beschichtungszeit bei der kathodischen Tauchlackierung für das Aufbringen der Beschichtung auf dem metallischen Körper gemäß (c) bzw. der Beschichtung gemäß (II.1.2) bzw. (II.2.2) im Rahmen des Dämpfungselements beträgt bevorzugt im Bereich von 50 bis 500 Sekunden, weiter bevorzugt im Bereich von 100 bis 300 Sekunden, weiter bevorzugt im Bereich von 120 bis 240 Sekunden. Das Anoden/Kathoden-Verhältnis bei der kathodischen Tauchlackierung für das Aufbringen der Beschichtung auf dem metallischen Körper gemäß (c) bzw. der Beschichtung gemäß (II.1.2) bzw. (II.2.2) im Rahmen des Dämpfungselements beträgt bevorzugt im Bereich von 1:10 bis 10:1, weiter bevorzugt im Bereich von 1 : 6 bis 1 : 4.

Die Beschichtung auf dem metallischen Körper gemäß (c) bzw. die gemäß (II.1.2) bzw. (II.2.2) erhaltene Beschichtung weist bevorzugt eine Schichtdicke im Bereich von 1 bis 100 Mikrometer, weiter bevorzugt im Bereich von 5 bis 60 Mikrometer, weiter bevorzugt im Bereich von 10 bis 50 Mikrometer, weiter bevorzugt im Bereich von 20 bis 40 Mikrometer, auf, bestimmt gemäß DIN EN ISO 2808. Die Beschichtung auf dem metallischen Körper gemäß (c) bzw. die gemäß (11.1.2) bzw. (II.2.2) erhaltene Beschichtung eine Trockenfilmdichte im Bereich von 0,5 bis 5 g/cm³, bevorzugt im Bereich von 1 bis 2,5 g/cm³, weiter bevorzugt im Bereich von 1,1 bis 2,0 g/cm³, weiter bevorzugt im Bereich von 1,3 bis 1,4 g/cm³ aufweist, bestimmt gemäß DIN 53219.

In einer bevorzugten Ausführungsform des Verfahrens zur Herstellung eines Dämpfungselements umfasst das Einbringen der Kunststoffzusammensetzung gemäß (II.3):
II.3.1)Bereitstellen einer ersten Komponente der Kunststoffzusammensetzung, bevorzugt einer Polyisocyanatzusammensetzung, bevorzugt eines Isocyanatterminierten Prepolymers der Kunststoffzusammensetzung;
II.3.2)Bereitstellen einer zweiten Komponente der Kunststoffzusammensetzung, bevorzugt der Polyolzusammensetzung der Kunststoffzusammensetzung, weiter bevorzugt der verbleibenden Polyolzusammensetzung der Kunststoffzusammensetzung;
II.3.3)Vermischen der ersten und zweiten Komponente Kunststoffzusammensetzung; unter Erhalt eines reaktiven Gemisches der Kunststoffzusammensetzung;
II.3.4)Einbringen des reaktiven Gemisches gemäß (II.3.3) in den leer verbliebenen Teil der Form aus (II.2).

Für die Kunststoffzusammensetzung gilt das gleiche, wie bereits oben unter "Polyurethan des Kunststoffkörpers gemäß (c)" für das Kompositelement beschrieben ist, insbesondere die einzelnen Komponenten sind für die Herstellung des Dämpfungselements wie dort bereits beschrieben.

In einer bevorzugten Ausgestaltung des Verfahrens zur Herstellung eines Dämpfungselements ist die erste Komponente der Kunststoffzusammensetzung gemäß II.3.1), insbesondere das isocyanatterminierte Prepopylmer (iii.a) der Kunststoffzusammensetzung gemäß II.3.1), erhalten oder erhältlich aus der Umsetzung einer Polyisocyanatzusammensetzung (iii) mit einem Teil der Polyolzusammensetzung (iv), wobei der verbliebene Teil der Polyolzusammensetzung (iv.a) als zweite Komponente der Kunststoffzusammensetzung gemäß II.3.2) bereitgestellt wird. Isocyanatterminiertes Prepopylmer (iii.a) und verbliebener Teil der Polyolzusammensetzung (iv.a) werden dann vermischt, optional in Gegenwart einer Kettenverlängererzusammensetzung (v), wobei ein reaktives Gemisches der Kunststoffzusammensetzung erhalten wird gemäß II.3.). Dieses reaktive Gemisch gemäß (II.3.3) wird dann in den leer verbliebenen Teil der Form aus (II.2) eingebracht und dort zur Reaktion gebracht wird. Bevorzugt werden erste und zweite Komponente der Kunststoffzusammensetzung vortemperiert auf Temperaturen im Bereich von 30 bis 70 °C, weiter bevorzugt im Bereich von 40 bis 60°C, zusammengeführt. Das reaktive Gemisch wird in der Form bevorzugt bei einer Temperatur im Bereich von 80 bis 100 °C zur Reaktion gebracht. Bevorzugt erfolgt eine thermische Nachbehandlung für eine Zeitspanne von 24 bis 48 Stunden bei einer Temperatur im Bereich von 80 bis 100 °C.

Bevorzugt ist das mindestens eine Polyurethan des Kunststoffkörpers gemäß (c) ein Polyurethangießelastomer oder ein Polyurethanschaum, weiter bevorzugt ein Polyurethangie-ßelastomer.

In einer besonders bevorzugten Ausführungsform ist das Polyurethan des Kunststoffkörpers gemäß (c) ein Polyurethangießelastomer, welches erhalten oder erhältlich ist durch Umsetzung eines Prepolymers (iii.a) auf Basis von 4,4'-Diphenylmethan-diisocyanat; carbodiimidmodifiziertem 4,4'-MDI, linearem Polyesterdiol mit einer Hydroxylzahl im Bereich von 35 bis 120 mg KOH/g aufgebaut aus Adipinsäure, Ethylenglykol und 1,4-Butandiol und/oder einem verzweigtem Polyesterdiol mit einer Hydroxylzahl im Bereich von 35 bis 120 mg KOH/g, aufgebaut aus Adipinsäure, Ethylenglykol und 1,4-Butandiol; jeweils aufweisend einen NCO-Gehalt im Bereich von 10 bis 28 Gewichts-%; mit einem Polyol (iv.a), welches bevorzugt ein lineares Polyesterdiol mit einer Hydroxylzahl im Bereich von 35 bis 120 mg KOH/g aufgebaut aus Adipinsäure, Ethylenglykol und 1,4-Butandiol umfasst, weiter bevorzugt ist; und wobei als Kettenverlängerer (v) mindestens ein lineares aliphatisches Diol mit 2 bis 6 Kohlenstoffatomen, weiter bevorzugt mindestens 1,4-Butandiol, eingesetzt wird. Isocyanatkomponente, bevorzugt Prepolymer, und Polyolkomponente werden, bevorzugt vortemperiert auf Temperaturen im Bereich von 30 bis 70 °C, weiter bevorzugt im Bereich von 40 bis 60°C, zusammengeführt und anschließend als reaktives Gemisch bei einer Temperatur im Bereich von 80 bis 100 °C zur Reaktion gebracht. Bevorzugt erfolgt eine thermische Nachbehandlung für eine Zeitspanne von 24 bis 48 Stunden bei einer Temperatur im Bereich von 80 bis 100 °C.

Gemäß II.2) wird ein weiterer Körpers in die Form, bevorzugt in die Gußform, eingebracht wobei ein Teil der Form, bevorzugt zwischen metallischem Körper gemäß (II.1) und weiterem Körper, leer verbleibt. Für den weiteren Köper gelten die gleichen bevorzugten Ausführungsformen wie voranstehend zum Dämpfungselement selbst bereits beschrieben, d.h. in einer bevorzugten Ausführungsform umfasst der mindestens eine weitere Körper einen metallischen Körper, bevorzugt besteht er aus einem metallischen Körper, wobei der metallische Körper bevorzugt eine Eisenlegierung, weiter bevorzugt Stahl, oder Aluminium, umfasst, weiter bevorzugt zu mindestens 99 Gewichts-%, bezogen auf das Gesamtgewicht des weiteren Körpers, aus Stahl oder Aluminium. In einer weiteren bevorzugten Ausführungsform umfasst der weitere Körper ein Polyurethan, weiter bevorzugt ein zelliges Polyurethan. Für das zellige Polyurethan des weiteren Körpers gilt beim Herstellungsverfahren für das Dämpfungselement das Gleiche, was voranstehend bereits zum Dämpfungselement beschrieben wurde, insbesondere in der Sektion "Zelliges Polyurethan des weiteren Körpers" zum Dämpfungselement.

Die Erfindung betrifft auch die Verwendung eines Kompositelements wie vorstehend beschrieben oder eines Dämpfungselements wie vorstehend beschrieben für ein Kraftfahrtzeugbauteil, insbesondere ein Automobilbauteil, ein Flugzeugbauteil oder ein Schiffsbauteil, bevorzugt für ein Automobilbauteil.

Die vorliegende Erfindung wird durch die folgenden Ausführungsformen und Kombinationen von Ausführungsformen, die sich aus den entsprechenden Rückbezügen und Verweisen ergeben, näher illustriert. Insbesondere ist dabei anzumerken, dass in jedem Fall, in dem ein Bereich von Ausführungsformen benannt ist, beispielsweise im Kontext eines Ausdrucks wie "Verfahren gemäß einer der Ausführungsformen 1 bis 4" jede Ausführungsform in diesem Bereich als explizit für den Fachmann offenbart gemeint ist, d.h. die Formulierung dieses Ausdrucks für den Fachmann als synonym zu "Verfahren gemäß einer der Ausführungsformen 1, 2, 3 und 4" zu verstehen ist.

In einer Ausführungsform (1) betrifft die Erfindung ein Kompositelement, insbesondere für ein Dämpfungselement, umfassend
a) mindestens einen metallischen Körper aufweisend eine Oberfläche;
b) eine Beschichtung umfassend ein Epoxidharz auf mindestens einem Teil der Oberfläche des metallischen Körpers;
c) einen Kunststoffkörper umfassend mindestens ein Polyurethan, welcher den metallischen Körper gemäß (a) zumindest teilweise umschließt und im Bereich der Umschließung zumindest teilweise in direktem Kontakt mit der Beschichtung gemäß (b) steht;
wobei das Kompositelement zwischen der Oberfläche des metallischen Körpers (a) und der Beschichtung (b) eine Konversionsschicht (d) aufweist, welche mindestens eine Verbindung ausgewählt aus der Gruppe von Zirkon(IV)oxid, Zink(II)phosphat und Chromat umfasst.

Eine bevorzugte Ausführungsform (2), welche Ausführungsform (1) konkretisiert, betrifft ein Kompositelement, wobei die Beschichtung umfassend ein Epoxidharz gemäß (b) auf mindestens einem Teil der Oberfläche des metallischen Körpers gemäß (a) aufgebracht oder aufbringbar ist mittels eines Verfahrens ausgewählt aus der Gruppe bestehend aus Sprühen und Lackieren, bevorzugt Lackieren, weiter bevorzugt Tauchlackierung, weiter bevorzugt kathodische Tauchlackierung.

Eine bevorzugte Ausführungsform (3), welche Ausführungsform (1) oder (2) konkretisiert, betrifft ein Kompositelement, wobei das Epoxidharz gemäß (b) ein Epoxidharz ist, welches bevorzugt erhalten oder erhältlich ist aus einer wasserhaltigen Epoxidharz-Dispersion, welche bevorzugt mehr als 50 Gewichts-% Wasser, bezogen auf das Gesamtgewicht der wasserhaltigen Epoxidharz-Dispersion, aufweist.

Eine bevorzugte Ausführungsform (4), welche eine der Ausführungsformen (1) bis (3) konkretisiert, betrifft ein Kompositelement, wobei die Epoxidharz-Dispersion ein Epoxidharz aufweisend Ammoniumgruppen umfasst, erhalten oder erhältlich durch
A) Umsetzung mindestens der Komponenten
   i) ein Vorprodukt, welches unter Zusatz von Phosphinen und/oder Phosphinsalzen als Katalysator hergestellt oder herstellbar ist aus
      i.a) mindestens einer Diepoxidverbindung;
      i.b) mindestens einem Mono- oder Diphenol oder einer Mischung aus einem Mono- und einem Diphenol;
   ii) mindestens einem organischen Amin;
   bei einer Zugabetemperatur im Bereich von 60 bis 130°C zu einem Epoxid-Amin-Addukt;
B) anschließende oder gleichzeitige Umsetzung der sekundären Hydroxylgruppen, die bei der Umsetzung der Komponenten i.a) und i.b) gebildet worden sind, mit Epoxidgruppen des in Stufe A) hergestellten Epoxid-Amin-Adduktes bei einer Temperatur von 110 bis 150°C,
C) Zusatz mindestens eines Vernetzungsmittels bei einer Temperatur von <150°C,
D) Neutralisierung;
E) Dispergierung der in den Stufen A) bis D) erhaltenen Mischung in Wasser.

Eine bevorzugte Ausführungsform (5), welche eine der Ausführungsformen (1) bis (4) konkretisiert, betrifft ein Kompositelement, wobei die Beschichtung gemäß (b) eine Schichtdicke im Bereich von 1 bis 100 Mikrometer, bevorzugt im Bereich von 5 bis 60 Mikrometer, weiter bevorzugt im Bereich von 10 bis 50 Mikrometer, weiter bevorzugt im Bereich von 20 bis 40 Mikrometer, aufweist, bestimmt gemäß DIN EN ISO 2808.

Eine bevorzugte Ausführungsform (6), welche eine der Ausführungsformen (1) bis (5) konkretisiert, betrifft ein Kompositelement, wobei die Beschichtung gemäß (b) eine Trockenfilmdichte im Bereich von 0,5 bis 5 g/cm³, bevorzugt im Bereich von 1 bis 2,5 g/cm³, weiter bevorzugt im Bereich von 1,1 bis 2,0 g/cm³, weiter bevorzugt im Bereich von 1,3 bis 1,4 g/cm³ aufweist, bestimmt gemäß DIN 53219.

Eine bevorzugte Ausführungsform (7), welche eine der Ausführungsformen (1) bis (6) konkretisiert, betrifft ein Kompositelement, wobei das mindestens eine Polyurethan des Kunststoffkörpers gemäß (c) erhalten oder erhältlich ist durch Umsetzung mindestens der Komponenten:
(iii) eine Polyisocyanatzusammensetzung;
(iv) eine Polyolzusammensetzung;
(v) optional eine Kettenverlängererzusammensetzung.

Eine bevorzugte Ausführungsform (8), welche eine der Ausführungsformen (1) bis (7) konkretisiert, betrifft ein Kompositelement, wobei die Polyisocyanatzusammensetzung gemäß (iii) mindestens ein Polyisocyanat ausgewählt aus den Diisocyanaten, bevorzugt ausgewählt aus der Gruppe bestehend aus 1,5-Naphthalendiisocyanat (1,5-NDI), 3,3'-Dimethylbiphenyl-4,4'-diyldiisocyanat (TODI), 2,2'- Diphenylmethandiisocyanat (2,2'-MDI), 2,4'- Diphenylmethandiisocyanat (2,4'-MDI), 4,4'-Diphenylmethandiisocyanat (4,4'-MDI), carbodiimid-modifiziertes 4,4'-MDI, Hexamethylen-1,6-diisocyanat (HDI) und 4,4'-, 2,4'- und 2,2'-Methylendicyclohexyldiisocyanat (H12MDI) und höherkernigen Homologen des Methandiphenyldiisocyanats (Polymer-MDI), weiter bevorzugt mindestens 4,4'-MDI oder carbodiimid-modifiziertes 4,4'-MDI oder eine Mischung aus 4,4'-MDI und carbodiimid-modifiziertem 4,4'-MDI, enthält.

Eine bevorzugte Ausführungsform (9), welche eine der Ausführungsformen (1) bis (8) konkretisiert, betrifft ein Kompositelement, wobei die Polyolzusammensetzung gemäß (iv) mindestens ein Polyester-, Polyether- oder Polyetheresterpolyol umfasst, bevorzugt ausgewählt aus der Gruppe der zwei bis sechsfunktionalen Polyesterpolyole und Polyetherpolyole, bevorzugt aus der Gruppe der zwei- und drei funktionalen Polyesterpolyole, bevorzugt aus der Gruppe der zwei -und drei funktionalen Adipinsäureester.

Eine bevorzugte Ausführungsform (10), welche eine der Ausführungsformen (1) bis (9) konkretisiert, betrifft ein Kompositelement, wobei die Kettenverlängererzusammensetzung gemäß (iv) mindestens eine Verbindung umfasst, welche mindestens zwei gegenüber Isocyanaten reaktive funktionelle Gruppen, bevorzugt zwei gegenüber Isocyanaten reaktive funktionelle Gruppen, aufweist, wobei die gegenüber Isocyanaten reaktiven funktionellen Gruppen bevorzugt ausgewählt sind aus der Gruppe von Hydroxylgruppe, Aminogruppe und Thiolgruppe, wobei die mindestens eine Verbindung, welche gegenüber Isocyanaten reaktive funktionelle Gruppen aufweist, weiter bevorzugt ausgewählt ist aus der Gruppe bestehend aus Monoethylenglycol, 1,4-Butandiol, Diethylengylcol, Glycerin, Trimethylolpropan und 2,4-Diamino-3,5-di(methylthio)toluol, und weiter bevorzugt mindestens 1,4-Butandiol umfasst.

Eine bevorzugte Ausführungsform (11), welche eine der Ausführungsformen (1) bis (10) konkretisiert, betrifft ein Kompositelement, wobei die Polyisocyanatzusammensetzung (iii) in Form eines isocyanatterminierten Prepopylmers (iii.a), erhalten oder erhältlich aus der Umsetzung von Polyisocyanatzusammensetzung (iii) mit einem Teil der Polyolzusammensetzung (iv), vorliegt, und das Polyurethan erhalten oder erhältlich ist durch Umsetzung von mindestens den Komponenten
(iii.a) isocyanatterminiertes Prepolymer;
(iv.a) verbliebener Teil der Polyolzusammensetzung (iv);
(v) optional Kettenverlängererzusammensetzung.

Eine bevorzugte Ausführungsform (12), welche eine der Ausführungsformen (1) bis (11) konkretisiert, betrifft ein Kompositelement, wobei das mindestens eine Polyurethan des Kunststoffkörpers gemäß (c) ein Polyurethangießelastomer oder ein Polyurethanschaum ist, bevorzugt ein Polyurethangießelastomer.

Eine bevorzugte Ausführungsform (13), welche eine der Ausführungsformen (1) bis (12) konkretisiert, betrifft ein Kompositelement, wobei der metallische Körper eine Eisenlegierung, bevorzugt Stahl, oder Aluminium, umfasst.

Eine bevorzugte Ausführungsform (14), welche eine der Ausführungsformen (1) bis (13) konkretisiert, betrifft ein Kompositelement, wobei der metallische Körper eine Form ausgewählt aus der Gruppe bestehend aus Scheibe, Lochscheibe, Ring, Zylinder und Hohlzylinder aufweist, wobei ein Hohlzylinder bevorzugt auch eine Hülse umfasst.

In einer Ausführungsform (15) betrifft die Erfindung ein Dämpfungselement, umfassend
(1) ein Kompositelement umfassend
   a) einen metallischen Körper aufweisend eine Oberfläche;
   b) eine Beschichtung umfassend ein Epoxidharz auf mindestens einem Teil der Oberfläche des metallischen Körpers;
   c) einen Kunststoffkörper umfassend mindestens ein Polyurethan, welcher den metallischen Körper gemäß (a) zumindest teilweise umschließt und im Bereich der Umschließung zumindest teilweise in direktem Kontakt mit der Beschichtung gemäß (b) steht;
(2) mindestens einen weiteren Körper, welcher zumindest teilweise in direktem Kontakt mit dem Kompositelement gemäß (1), bevorzugt mit dem Kunststoffkörper gemäß (c), steht;
wobei das Kompositelement (1) zwischen der Oberfläche des metallischen Körpers (a) und der Beschichtung (b) eine Konversionsschicht (d) aufweist, welche mindestens eine Verbindung ausgewählt aus der Gruppe von Zirkon(IV)oxid, Zink(II)phosphat und Chromat umfasst.

Eine bevorzugte Ausführungsform (16), welche Ausführungsform (15) konkretisiert, betrifft ein Dämpfungselement, wobei der mindestens eine weitere Körper eine Beschichtung (b') umfassend ein Epoxidharz auf mindestens einem Teil seiner Oberfläche aufweist.

Eine bevorzugte Ausführungsform (17), welche Ausführungsform (15) oder (17) konkretisiert, betrifft ein Dämpfungselement, wobei die Beschichtung umfassend ein Epoxidharz gemäß (b) bzw. (b') auf mindestens einem Teil der Oberfläche des metallischen Körpers gemäß (a) bzw. auf mindestens einem Teil der Oberfläche des mindestens einen weiteren Körpers aufgebracht oder aufbringbar ist mittels eines Verfahrens ausgewählt aus der Gruppe bestehend aus Sprühen und Lackieren, bevorzugt Lackieren, weiter bevorzugt Tauchlackierung, weiter bevorzugt kathodischer Tauchlackierung.

Eine bevorzugte Ausführungsform (18), welche eine der Ausführungsformen (15) bis (17) konkretisiert, betrifft ein Dämpfungselement, wobei das Epoxidharz gemäß (b) bzw. (b') ein Epoxidharz umfasst, welches bevorzugt erhalten oder erhältlich ist aus einer wasserhaltigen Epoxidharz-Dispersion, welche bevorzugt mehr als 50 Gewichts-% Wasser, bezogen auf das Gesamtgewicht der wasserhaltigen Epoxidharz-Dispersion, aufweist.

Eine bevorzugte Ausführungsform (19), welche eine der Ausführungsformen (15) bis (18) konkretisiert, betrifft ein Dämpfungselement, wobei die Epoxidharz-Dispersion ein Epoxidharz aufweisend Ammoniumgruppen umfasst, erhalten oder erhältlich durch
A) Umsetzung mindestens der Komponenten
   i) ein Vorprodukt, welches unter Zusatz von Phosphinen und/oder Phosphinsalzen als Katalysator hergestellt oder herstellbar ist aus
      i.a) mindestens einer Diepoxidverbindung;
      i.b) mindestens einem Mono- oder Diphenol oder einer Mischung aus einem Mono- und einem Diphenol;
   ii) mindestens einem organischen Amin;
   bei einer Zugabetemperatur im Bereich von 60 bis 130°C zu einem Epoxid-Amin-Addukt;
B) anschließende oder gleichzeitige Umsetzung der sekundären Hydroxylgruppen, die bei der Umsetzung der Komponenten i.a) und i.b) gebildet worden sind, mit Epoxidgruppen des in Stufe A) hergestellten Epoxid-Amin-Adduktes bei einer Temperatur von 110 bis 150°C,
C) Zusatz mindestens eines Vernetzungsmittels bei einer Temperatur von <150°C,
D) Neutralisierung;
E) Dispergierung der in den Stufen A) bis D) erhaltenen Mischung in Wasser.

Eine bevorzugte Ausführungsform (20), welche eine der Ausführungsformen (15) bis (19) konkretisiert, betrifft ein Dämpfungselement, wobei die Beschichtung gemäß (b) bzw. (b') eine Schichtdicke im Bereich von 1 bis 100 Mikrometer, bevorzugt im Bereich von 5 bis 60 Mikrometer, weiter bevorzugt im Bereich von 10 bis 50 Mikrometer, weiter bevorzugt im Bereich von 20 bis 40 Mikrometer, aufweist, bestimmt gemäß DIN EN ISO 2808.

Eine bevorzugte Ausführungsform (21), welche eine der Ausführungsformen (15) bis (20) konkretisiert, betrifft ein Dämpfungselement, wobei die Beschichtung gemäß (b) bzw. (b') eine Trockenfilmdichte im Bereich von 0,5 bis 5 g/cm³, bevorzugt im Bereich von 1 bis 2,5 g/cm³, weiter bevorzugt im Bereich von 1,1 bis 2,0 g/cm³, weiter bevorzugt im Bereich von 1,3 bis 1,4 g/cm³ aufweist, bestimmt gemäß DIN 53219.

Eine bevorzugte Ausführungsform (22), welche eine der Ausführungsformen (15) bis (21) konkretisiert, betrifft ein Dämpfungselement, wobei das mindestens eine Polyurethan des Kunststoffkörpers gemäß (c) erhalten oder erhältlich ist durch Umsetzung mindestens der Komponenten:
(iii) eine Polyisocyanatzusammensetzung;
(iv) eine Polyolzusammensetzung;
(v) optional eine Kettenverlängererzusammensetzung.

Eine bevorzugte Ausführungsform (23), welche eine der Ausführungsformen (15) bis (22) konkretisiert, betrifft ein, wobei die Polyisocyanatzusammensetzung gemäß (iii) mindestens ein Polyisocyanat ausgewählt aus den Diisocyanaten, bevorzugt ausgewählt aus der Gruppe bestehend aus 1,5-Naphthalendiisocyanat (1,5-NDI), 3,3'-Dimethylbiphenyl-4,4'-diyldiisocyanat (TODI), 2,2'- Diphenylmethandiisocyanat (2,2'-MDI), 2,4'- Diphenylmethandiisocyanat (2,4'-MDI), 4,4'-Diphenylmethandiisocyanat (4,4'-MDI), carbodiimid-modifiziertes 4,4'-MDI, Hexamethylen-1,6-diisocyanat (HDI) und 4,4'-, 2,4'- und 2,2'-Methylendicyclohexyldiisocyanat (H12MDI) und höherkernigen Homologen des Methandiphenyldiisocyanats (Polymer-MDI), weiter bevorzugt mindestens 4,4'-MDI oder carbodiimid-modifiziertes 4,4'-MDI oder eine Mischung aus 4,4'-MDI und carbodiimid-modifiziertem 4,4'-MDI, enthält.

Eine bevorzugte Ausführungsform (24), welche eine der Ausführungsformen (22) oder (23) konkretisiert, betrifft ein Dämpfungselement, wobei die Polyolzusammensetzung gemäß (iv) mindestens ein Polyester-, Polyether- oder Polyetheresterpolyol umfasst, bevorzugt ausgewählt aus der Gruppe der zwei bis sechsfunktionalen Polyesterpolyole und Polyetherpolyole, bevorzugt aus der Gruppe der zwei- und drei funktionalen Polyesterpolyole, bevorzugt aus der Gruppe der zwei- und drei funktionalen Adipinsäureester.

Eine bevorzugte Ausführungsform (25), welche eine der Ausführungsformen (22) bis (24) konkretisiert, betrifft ein Dämpfungselement, wobei die Kettenverlängererzusammensetzung gemäß (iv) mindestens eine Verbindung umfasst, welche mindestens zwei gegenüber Isocyanaten reaktive funktionelle Gruppen, bevorzugt zwei gegenüber Isocyanaten reaktive funktionelle Gruppen, aufweist, wobei die gegenüber Isocyanaten reaktiven funktionellen Gruppen bevorzugt ausgewählt sind aus der Gruppe von Hydroxylgruppe, Aminogruppe und Thiolgruppe, wobei die mindestens eine Verbindung, welche gegenüber Isocyanaten reaktive funktionelle Gruppen aufweist, weiter bevorzugt ausgewählt ist aus der Gruppe bestehend aus Monoethylenglycol, 1,4-Butandiol, Diethylengylcol, Glycerin, Trimethylolpropan und 2,4-Diamino-3,5-di(methylthio)toluol, und weiter bevorzugt mindestens 1,4-Butandiol umfasst.

Eine bevorzugte Ausführungsform (26), welche eine der Ausführungsformen (22) bis (25) konkretisiert, betrifft ein Dämpfungselement, wobei die Polyisocyanatzusammensetzung (iii) in Form eines isocyanatterminierten Prepopylmers (iii.a), erhalten oder erhältlich aus der Umsetzung von Polyisocyanatzusammensetzung (iii) mit einem Teil der Polyolzusammensetzung (iv), vorliegt, und das Polyurethan erhalten oder erhältlich ist durch Umsetzung von mindestens den Komponenten
(iii.a) isocyanatterminiertes Prepolymer;
(iv.a) verbliebener Teil der Polyolzusammensetzung (iv);
(v) optional Kettenverlängererzusammensetzung.

Eine bevorzugte Ausführungsform (27), welche eine der Ausführungsformen (22) bis (26) konkretisiert, betrifft ein Dämpfungselement7, wobei das mindestens eine Polyurethan des Kunststoffkörpers gemäß (c) ein Polyurethangießelastomer oder ein Polyurethanschaum ist, bevorzugt ein Polyurethangießelastomer.

Eine bevorzugte Ausführungsform (28), welche eine der Ausführungsformen (22) bis (26) konkretisiert, betrifft ein Dämpfungselement, wobei der metallische Körper eine Eisenlegierung, bevorzugt Stahl, oder Aluminium umfasst.

Eine bevorzugte Ausführungsform (29), welche eine der Ausführungsformen (22) bis (28) konkretisiert, betrifft ein Dämpfungselement, wobei der metallische Körper eine Form ausgewählt aus Scheibe, Lochscheibe, Ring, Zylinder und Hohlzylinder aufweist, wobei ein Hohlzylinder bevorzugt auch eine Hülse umfasst.

Eine bevorzugte Ausführungsform (30), welche eine der Ausführungsformen (22) bis (29) konkretisiert, betrifft ein Dämpfungselement, wobei der mindestens eine weitere Körper einen metallischen Körper umfasst, bevorzugt aus einem metallischen Körper besteht, wobei der metallische Körper bevorzugt eine Eisenlegierung, weiter bevorzugt Stahl, oder Aluminium, umfasst.

Eine bevorzugte Ausführungsform (31), welche eine der Ausführungsformen (22) bis (30) konkretisiert, betrifft ein Dämpfungselement, wobei der mindestens eine weitere Körper ein Polyurethan umfasst, bevorzugt ein zelliges Polyurethan, bevorzugt ein zelliges Polyurethan aufweisend eine Dichte im Bereich von 200 bis 1100 kg/m³, weiter bevorzugt eine Dichte im Bereich von 200 bis 750 kg/m³.

Eine bevorzugte Ausführungsform (32), welche Ausführungsform (31) konkretisiert, betrifft ein Dämpfungselement, wobei das zellige Polyurethan erhalten oder erhältlich ist durch Umsetzung mindestens der Komponenten Isocyanatzusammensetzung, gegenüber Isocyanaten reaktiver Verbindung, Wasser und optional Polisiloxanzusammensetzung und optional Fettsäuresulfonate.

Eine Ausführungsform (33) der Erfindung betrifft ein Verfahren zur Herstellung eines Kompositelements, wobei das Kompositelement
a) mindestens einen metallischen Körper aufweisend eine Oberfläche;
b) eine Beschichtung umfassend ein Epoxidharz auf mindestens einem Teil der Oberfläche des metallischen Körpers;
c) einen Kunststoffkörper umfassend mindestens ein Polyurethan, welcher den metallischen Körper gemäß (a) zumindest teilweise umschließt und im Bereich der Umschließung zumindest teilweise in direktem Kontakt mit der Beschichtung gemäß (b) steht; umfasst,

wobei das Kompositelement zwischen der Oberfläche des metallischen Körpers (a) und der Beschichtung (b) eine Konversionsschicht (d), welche mindestens eine Verbindung ausgewählt aus der Gruppe von Zirkon(IV)oxid, Zink(II)phosphat und Chromat umfasst; umfassend;
umfassend
   I) Bereitstellen mindestens eines metallischen Körpers aufweisend eine Oberfläche und eine Beschichtung umfassend ein Epoxidharz auf mindestens einem Teil der Oberfläche des metallischen Körpers;
   II) Einbetten des beschichteten metallischen Körpers gemäß (I) in eine Kunststoffzusammensetzung umfassend mindestens ein Polyurethan, wobei der beschichtete metallische Körper zumindest teilweise von der Kunststoffzusammensetzung umschlossen wird und diese im Bereich der Umschließung zumindest teilweise in direktem Kontakt mit der Beschichtung gemäß (b) gelangt.

Eine Ausführungsform (34) der Erfindung betrifft ein Verfahren zur Herstellung eines Dämpfungselements umfassend
(1) ein Kompositelement umfassend
   a) mindestens einen metallischen Körper aufweisend eine Oberfläche;
   b) eine Beschichtung umfassend ein Epoxidharz auf mindestens einem Teil der Oberfläche des metallischen Körpers;
   c) einen Kunststoffkörper umfassend mindestens ein Polyurethan, welcher den metallischen Körper gemäß (a) zumindest teilweise umschließt und im Bereich der Umschließung zumindest teilweise in direktem Kontakt mit der Beschichtung gemäß (b) steht,
   wobei das Kompositelement (1) zwischen der Oberfläche des metallischen Körpers (a) und der Beschichtung (b) eine Konversionsschicht (d) aufweist, welche mindestens eine Verbindung ausgewählt aus der Gruppe von Zirkon(IV)oxid, Zink(II)phosphat und Chromat, umfasst;
(2) mindestens einen weiteren Körper, welcher zumindest teilweise in direktem Kontakt mit dem Kompositelement gemäß (1), bevorzugt mit dem Kunststoffkörper gemäß (c), steht;
umfassend
III) Bereitstellen eines Kompositelements (1) und mindestens eines weiteren Körpers (2);
IV) zumindest anteiliges in Kontaktbringen und gegebenenfalls Verbinden von Kompositelement (1) und dem mindestens einen weiteren Körper (2) über eine Außenfläche des Kompositelements (1) und eine Außenfläche des mindestens einen weiteren Körpers (2).

Eine bevorzugte Ausführungsform (35), welche Ausführungsform (34) präzisiert, betrifft ein Verfahren zur Herstellung eines Dämpfungselements, wobei der weitere Körper eine Beschichtung umfassend ein Epoxidharz auf mindestens einem Teil seiner Oberfläche aufweist, wobei das Epoxidharz bevorzugt erhalten oder erhältlich ist aus einer wasserhaltigen Epoxidharz-Dispersion, welche bevorzugt mehr als 50 Gewichts-% Wasser, bezogen auf das Gesamtgewicht der wasserhaltigen Epoxidharz-Dispersion, aufweist.

Eine bevorzugte Ausführungsform (36), welche Ausführungsform (34) oder (35) präzisiert, betrifft ein Verfahren zur Herstellung eines Dämpfungselements, wobei das Kompositelement (1) zwischen der Oberfläche des metallischen Körpers (a) und der Beschichtung (b) eine Konversionsschicht (d) aufweist, welche mindestens eine Verbindung ausgewählt aus der Gruppe von Zirkon(IV)oxid, Zink(II)phosphat und Chromat, bevorzugt mindestens Zirkon(IV)oxid und/oder Zinkphosphat, weiter bevorzugt mindestens Zirkon(IV)oxid, umfasst und der weitere Körper zwischen seiner Oberfläche und der Beschichtung umfassend ein Epoxidharz eine Konversionsbeschichtung aufweist, welche mindestens eine Verbindung ausgewählt aus der Gruppe von Zirkon(IV)oxid, Zink(II)phosphat und Chromat, bevorzugt mindestens Zirkon(IV)oxid und/oder Zinkphosphat, weiter bevorzugt mindestens Zirkon(IV)oxid, umfasst.

Eine Ausführungsform (37) der Erfindung betrifft ein Verfahren zur Herstellung eines Dämpfungselements umfassend
(1) ein Kompositelement umfassend
   a) mindestens einen metallischen Körper aufweisend eine Oberfläche;
   b) eine Beschichtung umfassend ein Epoxidharz auf mindestens einem Teil der Oberfläche des metallischen Körpers;
   c) einen Kunststoffkörper umfassend mindestens ein Polyurethan, welcher den metallischen Körper gemäß (a) zumindest teilweise umschließt und im Bereich der Umschließung zumindest teilweise in direktem Kontakt mit der Beschichtung gemäß (b) steht,
   wobei das Kompositelement (1) zwischen der Oberfläche des metallischen Körpers (a) und der Beschichtung (b) eine Konversionsschicht (d) aufweist, welche mindestens eine Verbindung ausgewählt aus der Gruppe von Zirkon(IV)oxid, Zink(II)phosphat und Chromat, umfasst;
(2) mindestens einen weiteren Körper, welcher zumindest teilweise in direktem Kontakt mit dem Kompositelement gemäß (1), bevorzugt mit dem Kunststoffkörper gemäß (c), steht;
umfassend
II.1) Einbringen des metallischen Körpers aufweisend eine Oberfläche und eine Beschichtung umfassend ein Epoxidharz auf mindestens einem Teil der Oberfläche des metallischen Körpers in eine Form, bevorzugt eine Gußform,
II.2) Einbringen des weiteren Körpers in die Form, bevorzugt in die Gußform, wobei ein Teil der Form, bevorzugt zwischen metallischem Körper gemäß (II.1) und weiterem Körper, leer verbleibt;
II.3) Einbringen der Kunststoffzusammensetzung in den leer verbliebenen Teil der Form aus (II.2).

Eine bevorzugte Ausführungsform (38), welche Ausführungsform (37) präzisiert, betrifft ein Verfahren zur Herstellung eines Dämpfungselements, wobei (II.1) umfasst
II.1.1) Bereitstellen mindestens eines metallischen Körpers aufweisend eine Oberfläche;
II.1.2) Aufbringen einer Beschichtung umfassend ein Epoxidharz gemäß auf mindestens einem Teil der Oberfläche des metallischen Körpers mittels eines Verfahrens ausgewählt aus der Gruppe bestehend aus Sprühen und Lackieren, bevorzugt Tauchlackierung, weiter bevorzugt mittels kathodischer Tauchlackierung,
unter Erhalt eines metallischen Körper aufweisend eine Oberfläche und eine Beschichtung umfassend ein Epoxidharz auf mindestens einem Teil der Oberfläche des metallischen Körpers.

Eine bevorzugte Ausführungsform (39), welche Ausführungsform (37) oder (38) präzisiert, betrifft ein Verfahren zur Herstellung eines Dämpfungselements, wobei das Kompositelement (1) zwischen der Oberfläche des metallischen Körpers (a) und der Beschichtung (b) eine Konversionsschicht (d) aufweist, welche mindestens eine Verbindung ausgewählt aus der Gruppe von Zirkon(IV)oxid, Zink(II)phosphat und Chromat, bevorzugt mindestens Zirkon(IV)oxid und/oder Zinkphosphat, weiter bevorzugt mindestens Zirkon(IV)oxid, umfasst; bzw. wobei (II.1.2) umfasst:
II.1.2.1) Aufbringen einer Beschichtung auf mindestens einem Teil der Oberfläche des metallischen Körpers, welche mindestens eine Verbindung ausgewählt aus der Gruppe von Zirkon(IV)oxid, Zink(II)phosphat und Chromat, bevorzugt mindestens Zirkon(IV)oxid und/oder Zinkphosphat, weiter bevorzugt mindestens Zirkon(IV)oxid, umfasst, unter Erhalt einer Konversionsbeschichtung auf mindestens einem Teil der Oberfläche des metallischen Körpers;
II.1.2.2) Aufbringen einer Beschichtung umfassend ein Epoxidharz gemäß auf mindestens einem Teil der gemäß (II.1.2.1) erhaltenen Konversionsbeschichtung mittels eines Verfahrens ausgewählt aus der Gruppe bestehend aus Sprühen und Lackieren, bevorzugt Tauchlackierung, weiter bevorzugt mittels kathodischer Tauchlackierung.

Eine bevorzugte Ausführungsform (40), welche eine der Ausführungsformen (37) bis (39) präzisiert, betrifft ein Verfahren zur Herstellung eines Dämpfungselements, wobei der weitere Körper eine Beschichtung umfassend ein Epoxidharz auf mindestens einem Teil seiner Oberfläche aufweist, wobei (II.2) bevorzugt umfasst:
II.2.1) Bereitstellen mindestens eines weiteren Körpers aufweisend eine Oberfläche, bevorzugt mindestens eines weiteren Körpers umfassend eine Eisenlegierung oder Aluminium;
II.2.2) Aufbringen einer Beschichtung umfassend ein Epoxidharz gemäß auf mindestens einem Teil der Oberfläche des weiteren Körpers mittels eines Verfahrens ausgewählt aus der Gruppe bestehend aus Sprühen und Lackieren, bevorzugt Tauchlackierung, weiter bevorzugt mittels kathodischer Tauchlackierung,
unter Erhalt eines weiteren Körper aufweisend eine Oberfläche und eine Beschichtung umfassend ein Epoxidharz auf mindestens einem Teil seiner Oberfläche; wobei bevorzugt der weitere Körper zwischen seiner Oberfläche und der Beschichtung umfassend ein Epoxidharz eine Konversionsbeschichtung aufweist, welche mindestens eine Verbindung ausgewählt aus der Gruppe von Zirkon(IV)oxid, Zink(II)phosphat und Chromat, bevorzugt mindestens Zirkon(IV)oxid und/oder Zinkphosphat, weiter bevorzugt mindestens Zirkon(IV)oxid, umfasst.

Eine bevorzugte Ausführungsform (41), welche eine der Ausführungsformen (37) bis (40) präzisiert, betrifft ein Verfahren zur Herstellung eines Dämpfungselements, wobei das gemäß (II.1.2) bzw. gemäß (II.2.2) verwendete Epoxidharz ein Epoxidharz umfasst, welches bevorzugt erhalten oder erhältlich ist aus einer wasserhaltigen Epoxidharz-Dispersion, welche bevorzugt mehr als 50 Gewichts-% Wasser, bezogen auf das Gesamtgewicht der wasserhaltigen Epoxidharz-Dispersion, aufweist.

Eine bevorzugte Ausführungsform (42), welche eine der Ausführungsformen (35) oder (39) bis (41) präzisiert, betrifft ein Verfahren zur Herstellung eines Dämpfungselements, wobei die Epoxidharz-Dispersion ein Epoxidharz aufweisend Amminogruppen umfasst, erhalten oder erhältlich durch
A) Umsetzung mindestens der Komponenten
   i) ein Vorprodukt, welches unter Zusatz von Phosphinen und/oder Phosphinsalzen als Katalysator hergestellt oder herstellbar ist aus
      i.a) mindestens einer Diepoxidverbindung;
      i.b) mindestens einem Mono- oder Diphenol oder einer Mischung aus einem Mono- und einem Diphenol;
   ii) mindestens einem organischen Amin;
   bei einer Zugabetemperatur im Bereich von 60 bis 130°C zu einem Epoxid-Amin-Addukt;
B) anschließende oder gleichzeitige Umsetzung der sekundären Hydroxylgruppen, die bei der Umsetzung der Komponenten i.a) und i.b) gebildet worden sind, mit Epoxidgruppen des in Stufe A) hergestellten Epoxid-Amin-Adduktes bei einer Temperatur von 110 bis 150°C,
C) Zusatz mindestens eines Vernetzungsmittels bei einer Temperatur von <150°C,
D) Neutralisierung;
E) Dispergierung der in den Stufen A) bis D) erhaltenen Mischung in Wasser.

Eine bevorzugte Ausführungsform (43), welche eine der Ausführungsformen (35) oder (39) bis (42) präzisiert, betrifft ein Verfahren zur Herstellung eines Dämpfungselements, wobei für das Aufbringen der Beschichtung gemäß Ausführungsform (35) bzw. der Beschichtung gemäß (11.1.2) bzw. (II.2.2) eine kathodische Tauchlackierung eingesetzt wird, wobei die angelegte Spannung im Bereich von 50 bis 500 Volt, bevorzugt im Bereich von 100 bis 400 Volt, weiter bevorzugt im Bereich von 200 bis 350 Volt, liegt.

Eine bevorzugte Ausführungsform (44), welche eine der Ausführungsformen (35) oder (39) bis (43) präzisiert, betrifft ein Verfahren zur Herstellung eines Dämpfungselements, wobei für das Aufbringen der Beschichtung gemäß Ausführungsform (35) bzw. der Beschichtung gemäß (II.1.2) bzw. (II.2.2) eine kathodische Tauchlackierung eingesetzt wird, wobei die Beschichtungszeit im Bereich von 50 bis 500 Sekunden, bevorzugt im Bereich von 100 bis 300 Sekunden, weiter bevorzugt im Bereich von 120 bis 240 Sekunden, beträgt.

Eine bevorzugte Ausführungsform (45), welche eine der Ausführungsformen (35) oder (39) bis (44) präzisiert, betrifft ein Verfahren zur Herstellung eines Dämpfungselements, wobei für das Aufbringen der Beschichtung gemäß Ausführungsform (35) bzw. der Beschichtung gemäß (II.1.2) bzw. (II.2.2) eine kathodische Tauchlackierung eingesetzt wird, wobei das Anoden/Kathoden-Verhältnis im Bereich von 1:10 bis 10:1, bevorzugt im Bereich von 1 : 6 bis 1 : 4, beträgt.

Eine bevorzugte Ausführungsform (46), welche eine der Ausführungsformen (35) oder (39) bis (45) präzisiert, betrifft ein Verfahren zur Herstellung eines Dämpfungselements, wobei die gemäß Ausführungsform (35) bzw. gemäß (II.1.2) bzw. (II.2.2) erhaltene Beschichtung eine Schichtdicke im Bereich von 1 bis 100 Mikrometer, bevorzugt im Bereich von 5 bis 60 Mikrometer, weiter bevorzugt im Bereich von 10 bis 50 Mikrometer, weiter bevorzugt im Bereich von 20 bis 40 Mikrometer, aufweist, bestimmt gemäß DIN EN ISO 2808.

Eine bevorzugte Ausführungsform (47), welche eine der Ausführungsformen (35) oder (39) bis (46) präzisiert, betrifft ein Verfahren zur Herstellung eines Dämpfungselements, wobei die gemäß Ausführungsform (35) bzw. gemäß (II.1.2) bzw. (II.2.2) erhaltene Beschichtung eine Trockenfilmdichte im Bereich von 0,5 bis 5 g/cm³, bevorzugt im Bereich von 1 bis 2,5 g/cm³, weiter bevorzugt im Bereich von 1,1 bis 2,0 g/cm³, weiter bevorzugt im Bereich von 1,3 bis 1,4 g/cm³ aufweist, bestimmt gemäß DIN 53219.

Eine bevorzugte Ausführungsform (48), welche eine der Ausführungsformen (35) oder (39) bis (47) präzisiert, betrifft ein Verfahren zur Herstellung eines Dämpfungselements, wobei das Einbringen der Kunststoffzusammensetzung gemäß (II.3) umfasst:
II.3.1)Bereitstellen einer ersten Komponente der Kunststoffzusammensetzung, bevorzugt einer Isocyanatzusammensetzung, bevorzugt eines Isocyanatterminerten Prepolymers der Kunststoffzusammensetzung;
II.3.2)Bereitstellen einer zweiten Komponente der Kunststoffzusammensetzung, bevorzugt der Polyolzusammensetzung der Kunststoffzusammensetzung, weiter bevorzugt der verbleibenden Polyolzusammensetzung der Kunststoffzusammensetzung;
II.3.3)Vermischen der ersten und zweiten Komponente Kunststoffzusammensetzung; unter Erhalt eines reaktiven Gemisches der Kunststoffzusammensetzung;
II.3.4)Einbringen des reaktiven Gemisches gemäß (II.3.3) in den leer verbliebenen Teil der Form aus (II.2).

Eine Ausführungsform (49) der Erfindung betrifft die Verwendung eines Kompositelements gemäß einer der Ausführungsformen (1) bis (14) oder eines Dämpfungselements gemäß einer der Ausführungsformen (15) bis (31) für ein Kraftfahrtzeugbauteil, insbesondere ein Automobilbauteil, ein Flugzeugbauteil oder ein Schiffsbauteil, bevorzugt für ein Automobilbauteil.

Die nachfolgenden Beispiele dienen der Veranschaulichung der Erfindung, sind aber in keiner Weise einschränkend hinsichtlich des Gegenstands der vorliegenden Erfindung.

### BEISPIELE

### 1. Chemikalien

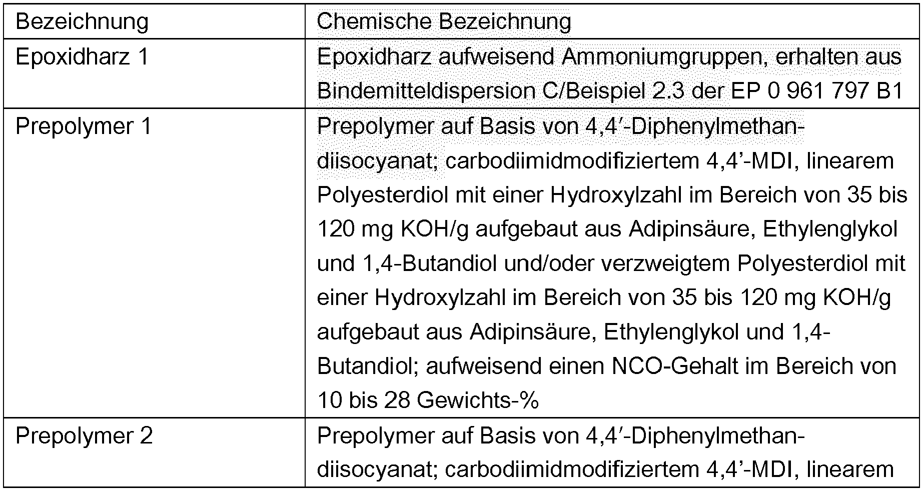

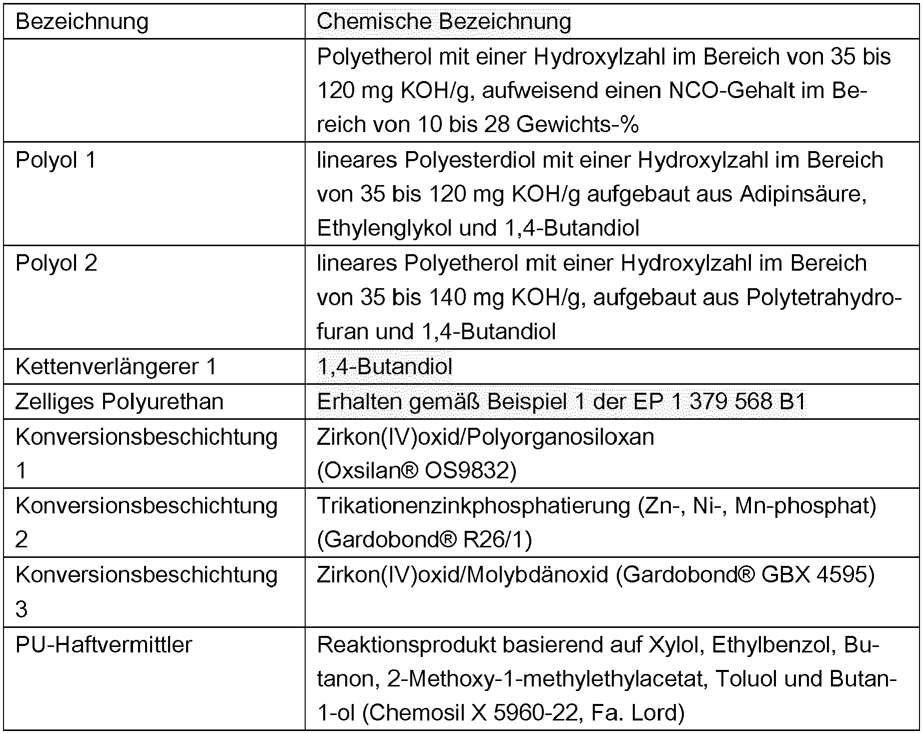

Bindemitteldispersion C/Beispiel 2.3 der EP 0 961 797 B1:
- Harzansatz:

| Gewichts-Teile | |
|---|---|
| 1128 | Epoxidharz (Basis Bisphenol A, EEW 188) |
| 228 | Bisphenol A |
| 94 | Phenol |
| 1,5 | Triphenylphosphin EEW=478 |
| 156,7 | Plastilit 3060 (Polyproplyenglykolverbindung, Fa.BASF) |
| 115,5 | Diethanolamin |
| 61,2 | N,N-Dimethylaminopropylamin Zwischenviskosität 1,7 dPas (Platte-Kegel-Viskosimeter bei 23 °C,40 %-ig in Salvenon PM) |
| 97,6 | Butylglykol |
| 812 | Vernetzer* |

| | |
|---|---|
| * Vernetzter erhalten gemäß Beispiel 1 der EP 0 961 797 B1 durch Umsatz von 1084 g Isomeren und höherfunktionellen Oligomeren auf Basis von 4,4'-Diphenylmethandiisocyanat mit einem NCO-Equivalentgewicht von 135 (BasonatR A270, Fa. BASF; NCO-Funktionalität ca 2,7; Gehalt an 2,2'- und 2,4'-Diphenylmethandiisocyanat unter 5%) unter Stickstoffatmosphäre. Zugabe von 2 g Dibutylzinndilaurat und Zutropfen von 1314 g Butyldiglycol mit einer solchen Geschwindigkeit, daß die Produkttemperatur unter 70°C blieb, ggf. Kühlung. Nach Ende der Zugabe wurde die Temperatur weitere 120 min bei 70 °C gehalten. Bei der nachfolgenden Kontrolle waren keine NCO-Gruppen mehr nachweisbar. Man kühlte auf 65 °C ab, der Feststoffgehalt lag bei> 97% (1 h bei 130 °C). | |

- Dispersion:

| Gewichts-Teile | |
|---|---|
| 2400 | Harzansatz (vorstehend beschrieben) |
| 2173 | VE-Wasser |
| 49,3 | Eisessig |
| 2751,7 | VE-Wasser |

Die Herstellung der Dispersion erfolgte wie in Beispiel 2.1 der EP 0 961 797 B1 beschrieben.
- Kennzahlen der Dispersion:
Festkörper (1 Std. bei 130 °C) = 45,1 %
M EQ-Base 0,822 meg/g Festharz
M EQ-Säure = 0,375 meg/g Festharz
pH 5,9
Leitwert 2, 7 ms/cm
Mittlere Teilchengröße = 1450 Angstrom (Lichtstreumethode)
Absetzstabilität Nach 2 Monaten Lagerzeit bei Raumtemperatur kein Bodensatz Viskosität: 22 sec. (DIN4-Becher bei 23 °C)
Lösungsmittelgehalt 1,7% Butylglykol (gaschromatographisch)

### 2. Beispiele

### 2.1 Aufbringung kathodische Tauchlackierung (KTL)-Beschichtung / Herstellung beschichteter metallischer Körper

Ein metallischer Körper aus Stahl wurde in einer KTL-Anlage der Firma Kesseböhmer (Deutschland) per kathodischer Tauchlackierung auf Teilen seiner Oberfläche mit Epoxidharz 1 beschichtet. Die Details zur KTL sind nachfolgend aufgelistet:
Badansatz (für 5 kg):

| | |
|---|---|
| 2,5 kg | VE-Wasser (vollentsalztes Wasser) |
| 2,0 kg | Bindemitteldispersion C / Epoxidharz 1 |
| 0,5 kg | Pigmentpaste umfassend Epoxidharz 1 als wässrige Lösung, Füllstoffe, Pigment |

Badkenndaten:
- Badtemperatur 32 bis 35 °C
- Leitfähigkeit gemäß DIN EN ISO 15091 1,0 bis 1,6 mS/cm
- pH-Wert gemäß DIN 55659-1 4,8 bis 5,2
- nicht-flüchtiger Anteil (NFA) gemäß DIN EN ISO 3251 (30 min 180 °C) 18 bis 20 Gewichts-%

Applikationsbedingungen:
- Spannung 200 bis 350 Volt
- Beschichtungszeit 120 bis 240 Sekunden
- Schichtdicke gemäß DIN EN ISO 2808 20 bis 40 µm
- Anoden/Kathoden-Verhältnis 1:6 bis 1:4

Nach der kathodischen Tauchlackierung wurde der erhaltene beschichtete metallische Körper mit vollentsalztem Wasser abgespült. Der beschichtete metallische Körper wurde anschließend einem Einbrennen unter den folgenden Bedingungen unterzogen.

Einbrennbedingungen:
- Objekttemperatur 175 °C
- Dauer > 15 Minuten

### 2.2 Einbettung in Gießelastomer / Herstellung Dämpfungselement

### a) Dämpfungselement, insbesondere für Anwendungen als Stoßdämpfer

Für die Herstellung eines Dämpfungselements wurde der aus 2.1 erhaltene beschichtete metallische Körper in eine Gießform eingebracht, in welcher ebenfalls ein Kunststoffkörper umfassend ein zelliges Polyurethan eingebracht wurde. Isocyanatkomponente (hier Prepolymer 1) und Polyolkomponente (Polyol 1) wurden vortemperiert auf 45°C bzw. > 45°C in einem Mischkopf zusammengeführt und anschließend als reaktives Gemisch in den zwischen beschichtetem metallischen Körper und Kunststoffkörper leer verbliebenen Teil der Form eingebracht und bei einer Temperatur im Bereich von 80 bis 100 °C zur Reaktion gebracht. Die thermische Nachbehandlung erfolgte für eine Zeitspanne von 24 bis 48 Stunden bei einer Temperatur im Bereich von 80 bis 100 °C. Der eingesetzte beschichtete metallische Körper ist schematisch in Fig. 1, das erhaltene Dämpfungselement ist schematisch in Fig. 2 gezeigt.

### b) Dämpfungselement, insbesondere für Anwendungen als Rundlager

Für die Herstellung eines Dämpfungselements wurden jeweils ein metallischer Körper in Form eines (Hohl)Zylinders (Innenhülse) sowie ein weiterer, ebenfalls metallischer, Körper in Form eines weiteren Hohlzylinders (Außenhülse) wie in Fig. 3 gezeigt analog zum in 2.1 beschriebenen Verfahren beschichtet, wobei bei der Innenhülse die Beschichtung zumindest auf einem Teil der äußeren Oberfläche und bei der Außenhülse die Beschichtung zumindest auf einem Teil der inneren Oberfläche aufgebracht wurde. Die erhaltenen beschichteten metallischen Körper wurden in eine Gießform eingebracht, wobei die Innenhülse innerhalb der Außenhülse positioniert wurde. Isocyanatkomponente (hier Prepolymer 1) und Polyolkomponente (Polyol 1) wurden vortemperiert auf 45°C bzw. > 45°C in einem Mischkopf zusammengeführt und anschließend als reaktives Gemisch in den zwischen Innen- und Außenhülse leer verbliebenen Teil der Form eingebracht und bei einer Temperatur im Bereich von 80 bis 100 °C zur Reaktion gebracht. Die thermische Nachbehandlung erfolgte für eine Zeitspanne von 24 bis 48 Stunden bei einer Temperatur im Bereich von 80 bis 100 °C. Ein Schnitt durch das erhaltene Rundlager ist schematisch in Fig 4 gezeigt.

### 2.3 Untersuchung der Haftfestigkeit

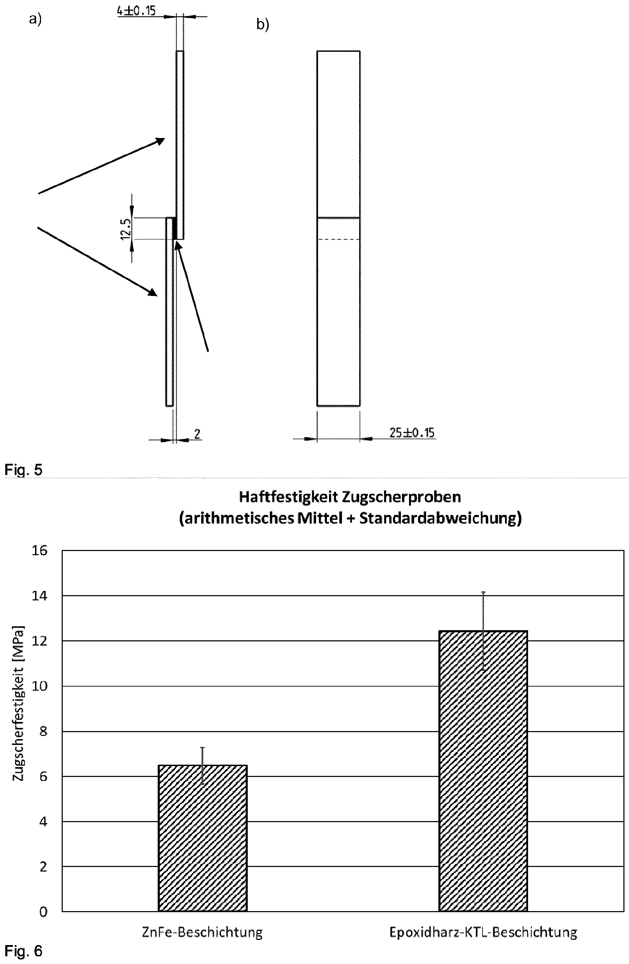

Eine Haftprüfung erfolgt in Anlehnung an DIN EN 1465 (Klebstoffe - Bestimmung der Zugscherfestigkeit von Überlappungsklebungen). Die Probengeometrie wurde abweichend zur DIN EN 1465 unter material- und fertigungsspezifischen Aspekten adaptiert. Jeweils zwei Substratköper (metallische Körper aufweisend eine Beschichtung, Details zur Beschichtung nachfolgend angegeben) wurden wie in Figur 3 gezeigt positioniert, wobei im Überlappungsbereich ein Kunststoffkörper, hier eine 2 mm starke Schicht einer Kunststoffzusammensetzung umfassend ein Polyurethan erhalten aus den Komponenten Prepolymer 1, Polyol 1 und Kettenverlängerer 1, vorhanden war. Um das höhere Biegemoment durch die größere Schichtstärke zu kompensieren, wurde die Substratdicke auf 4mm festgelegt, um ein Durchbiegen während der Prüfung zu minimieren. Die Abmaße der (Haft)Probe können Fig. 5 entnommen werden, wobei alle in Fig. 5 angegebenen Zahlenwerte in mm zu verstehen sind (z.B. 12.5 = 12,5 mm).

Die Proben, bestehend aus Substrat (metallischer Körper mit Beschichtung) und im Überlappungsbereich befindlicher Kunststoffzusammensetzung, wurden in einem eigenbeheizten Gießwerkzeug unter den gleichen Bedingungen wie für die Herstellung der Dämpfungselemente in 2.2 hergestellt, um eine Vergleichbarkeit der Haftung der Probekörper zu der Haftung der Dämpfungselemente bzw. der im Dämpfungselemenent enthaltenen Kompositelemente sicherzustellen.

Die Probe wurde über Keilschraub-Probenhalter der Firma Zwick Roell, Typ 8306 bzw. Typ 8406, aufgenommen. Die Hauptspannkraft wurde durch Keilwirkung erzielt. Die Spannkraft war dabei proportional zur aktuellen Zugkraft (selbstspannend), wodurch ein sicheres Spannen unterschiedlichster Materialien gewährleistet wurde. Der Keilschraub-Probenhalter ermöglichte zusätzlich ein asymmetrisches Spannen der Probe, um den Versatz zwischen dem oberen und unteren Substrat auszugleichen und somit eine Biegebeanspruchung der Haftprobe zu verhindern.

Der Probekörper wurde bis zum Bruch belastet. Für jede Probe wurde die größte Kraft während der Zerstörung als Bruchkraft aufgezeichnet. Die Prüfergebnisse für die gültigen Proben wurden durch den arithmetischen Mittelwert und den Variationskoeffizienten für die Bruchkraft in Newton oder die Bruchspannung in Megapascal angegeben.

Die Zugscherfestigkeit, in Megapascal, wurde durch Division der Bruchkraft, in Newton, durch die Klebefläche, in Quadratmillimeter, berechnet.

Bei der Untersuchung wurde die Haftfestigkeit zwischen Kunststoffkörper und zwei unterschiedlichen Oberflächenbeschichtungen der Substrate verglichen. Der metallische Körper der Substrate war aus einem Stahlwerkstoff hergestellt. Für einen Probenkörper wurden als Substrate metallische Körper mit einer galvanisch aufgebrachten Zink-Eisen-Beschichtung (ZnFe) verwendet. Für einen weiteren Probenkörper wurden als Substrate metallische Körper mit einer mittels kathodischer Tauchlackierung aufgebrachten Epoxidharzschicht verwendet.

Bei der Untersuchung der Bruchkraft bei einer Zugscherbelastung der Probekörper war deutlich zu sehen, dass für den Probenkörper mit dem per KTL auf den metallischen Körper der Substrate aufgebrachten Epoxidharz die Bruchkraft deutlich oberhalb der Bruchkraft eines Probekörpers lag, bei dem der metallische Körper eine galvanische ZnFe-Beschichtung aufwies. Darüber hinaus erfolgte der Bruch kohäsiv im Kunststoffkörper. Ein Vergleich der Zugscherfestigkeiten von Probekörpern mit ZnFe-beschichtetetem Substrat und Epoxidharz-beschichtetem Substrat ist in Fig. 6 gezeigt.

### 2.4 Zerstörerische Prüfung des Haftverbundes zwischen metallischen Körper und dem Kunststoffkörper

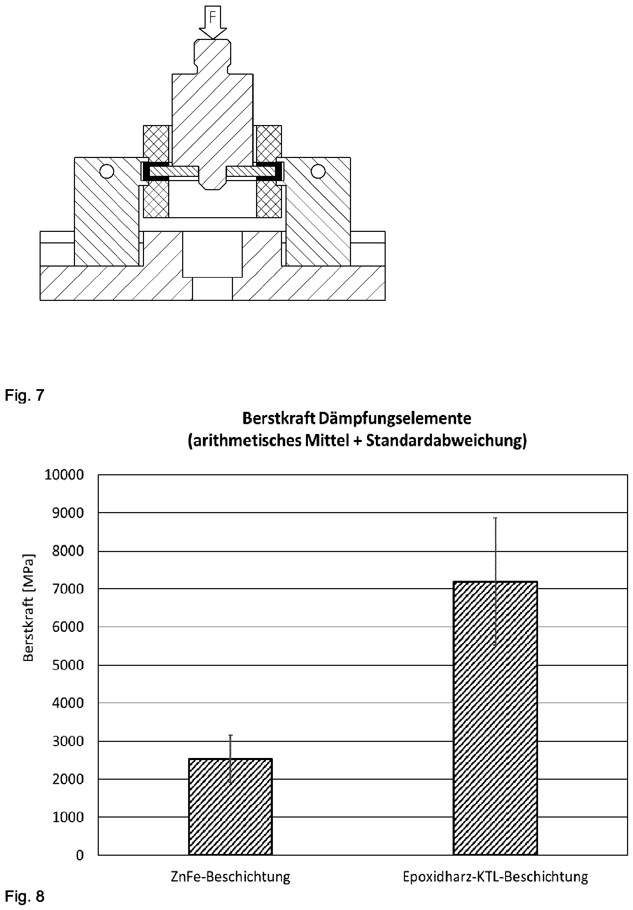

Eine zerstörerische Prüfung des Haftverbundes zwischen dem beschichteten metallischen Körper und dem Kunststoffkörper eines Dämpfungselementes wurde durchgeführt, um die Eignung am realen Bauteil zu validieren. Dazu wurde der Kunststoffkörper eines Dämpfungselementes gemäß 2.2 mit einer geeigneten Vorrichtung gehalten und der metallische Körper so belastet, das eine Zugscherbeanspruchung der Grenzschicht zwischen Kunststoffkörper und metallischem Körper bis zum Bruch erfolgte. Die gleiche Untersuchung wurde für ein Dämpfungselement durchgeführt, welches nur einen mit ZnFe beschichteten metallischen Körper enthielt. Auch hier zeigte sich eine deutliche Erhöhung der Berstkraft der Dämpfungselemente bei Verwendung eines metallischen Körpers mit einer Epoxidharz-Beschichtung anstelle einer ZnFe-Beschichtung, sowie eine Änderung der Bruchart von adhäsiv zu kohäsiv. Der Vergleich ist graphisch in Fig. 7 gezeigt. Die eingesetzte Vorrichtung ist schematisch in Fig. 8 dargestellt.

### 2.5 Auswertung auf Basis von 2.3 und 2.4

Bei der Verwendung von Stahlwerkstoffen als metallischer Körper in Dämpfungselementen ist auf einen ausreichenden Korrosionsschutz zu achten. Dieser wird üblicherweise durch eine auf dem metallischen Körper galvanisch aufgebrachte Zink-Eisen-Beschichtung (ZnFe) bzw. durch eine Zink-Nickel-Beschichtung (ZnNi) gewährleistet. Bisher wurde der Kunststoffkörper mittels Polyurethan (PU)-Reaktionsgussverfahren direkt haftend auf die ZnFe- bzw. ZnNi-Beschichtung aufgebracht. Durch Aufbringen einer Zugscherkraft oberhalb der Bruchkraft ergab sich dabei allerdings ein adhäsives Lösen des PU-Kunststoffkörpers von der ZnFe- bzw. ZnNi-Beschichtung. Um eine ausreichende Belastbarkeit des Dämpfungselementes zu gewährleisten, ist jedoch bei einer Zugscherprüfung ein kohäsiver Bruch im PU-Kunststoffkörper anzustreben. Dies wurde üblicherweise durch Aufbringen eines typischen 1- oder 2-komponentigen nasschemischen Haftvermittlers erreicht. Die Auftragung eines zusätzlichen Haftvermittlers auf die Korrosionsschutzschicht ist allerdings mit zusätzlichen Kosten verbunden. Insbesondere, wenn der Haftvermittler nur partiell aufgetragen werden darf, z.B. um Anschraubflächen auf dem metallischen Körper frei zu halten, ist das Verfahren zum Auftragen aufwendig und mit hohen Kosten verbunden, wodurch das Dämpfungselement in der Herstellung unwirtschaftlich wird.

Es konnte im Rahmen der vorliegenden Erfindung gezeigt werden, dass eine Beschichtung mittels kathodischer Tauchlackierung auf Epoxidharzbasis -hier gezeigt mit Epoxidharz 1- in Bezug auf die Anforderungen an die Haftvermittlung zwischen einem Kunststoffkörper und einem metallischen Körper einer reinen galvanischen Korrosionsschutzbeschichtung (ZnNi oder ZnFe) deutlich überlegen war bzw. die Anforderungen an die Haftvermittlung zwischen einem Kunststoffkörper und einem metallischen Körper genauso gut wie eine Kombination aus einer herkömmlichen galvanischen Korrosionsschutzbeschichtung (ZnNi oder ZnFe) und einem für diesen Zweck zusätzlich aufgetragener Haftvermittler erfüllte. Überraschenderweise wurde gefunden, dass die kathodische Tauchlackierung auf Epoxidharzbasis den Vorteil bot, dass sie gleichzeitig die Funktion des Korrosionsschutzes und der Haftvermittlung erfüllte, und somit von den Prozesskosten und der Anzahl erforderlicher Prozessschritte deutlich niedriger ausfiel als bei Verwendung eines galvanischen Korrosionsschutzes mit zusätzlichem nasschemisch aufgetragenen Haftvermittler.

Zusätzlich kann die Epoxidschicht auch im Bereich der Verschraubung der Dämpfungselemente eingesetzt werden, wodurch bei der Beschichtung ein wirtschaftlicheres Tauchverfahren eingesetzt werden kann anstelle einer teuren partiellen Auftragung eines Haftvermittlers durch Sprühverfahren. Dadurch ist das KTL-Verfahren auch bei metallischen Körpern aus Nichteisenmetallen, wie z.B. Aluminium, bei denen kein zusätzlicher Korrosionsschutz erforderlich ist, wirtschaftlicher zur Haftvermittlung einsetzbar, als ein nasschemisch, partiell aufgetragener Haftvermittler.

### 2.6 Aufbringung kathodische Tauchlackierung (KTL)-Beschichtung / Herstellung beschichteter metallischer Körper mit vorangegangenem Aufbringen einer Konversionsschicht

Gepresste Aluminium- (EN AW 6082) und Stahlflachstangen (Domex 650 MC) wurden zu Flachprofilen mit 110 x 25 x 4 mm zugeschnitten und jeweils 6 der Flachprofile anschließend durch kommerziell verfügbare Prozesse für Automobillacke ganzflächig mit einer Konversionsschicht und anschließend so belassen bzw. vergleichsweise wie in 2.1 beschrieben per kathodischer Tauchlackierung (KTL) mit Epoxidharz 1 oberflächenbeschichtet. Tabelle 1 gibt die aufgebrachten Schichten und die jeweilige Schichtdicke wieder.

**Tabelle 1**

| Charakterisierung Oberflächenbeschichtung der Metallprofile. | | |
|---|---|---|
| Typ Konversionsbeschichtung | Ohne KTL | Mit KTL (Epoxidharz 1) |
| | Schichtdicke [µm] | Schichtdicke [µm] |
| - | Aluminium (EN AW 6068) | |
| Konversionsbeschichtung 1 | 0.1 - 0.25 | 15-17 |
| Konversionsbeschichtung 2 | 2 | 19 |
| Konversionsbeschichtung 3 | 0.2 | 16 |
| - | Stahl (Domex 650 MC) | |
| Konversionsbeschichtung 1 | 0.1 - 0.25 | 16-24 |
| Konversionsbeschichtung 2 | 2 | 21-25 |

Für Vergleichsbeispiele wurden jeweils 10 der unbehandelten Aluminium- bzw. Stahlflachprofile durch Sandstrahlen mit Korund aufgeraut (R_{z}=20-25 µm) und mit PU-Haftvermittler behandelt. Die aufgebrachte Schicht wurde für 1 h luftgetrocknet (Schichtdicke: 14.2 ± 0.7 µm) und im Anschluss 2 h bei 120 °C gehärtet.

### 2.7 Untersuchung der Haftfestigkeit

Eine Haftprüfung erfolgte für die gemäß 2.6 beschichteten metallischen Körper in Anlehnung an DIN EN 1465 (Klebstoffe - Bestimmung der Zugscherfestigkeit von Überlappungsklebungen).

Jeweils 2 Flachprofile mit gleicher Oberflächenbehandlung gemäß 2.6 wurden bei 90 °C in eine entsprechend Fig. 5 ausgelegte Gießform eingebracht, für 30 Minuten temperiert und mit einem kompakten PU auf Basis von pTHF (Polyurethan erhalten aus den Komponenten Prepolymer 2 und Polyol 2 ) entlang der Haftfläche angegossen. Nach 30 min. wurde entformt und bei 90 °C für weitere 24 ± 2 h getempert.

Die Haftprüfung erfolgte auf einer Maschine vom Typ Z010 TH (Zwick Roell) mit einer Prüfgeschwindigkeit von 5 mm/min entlang der linearen Zugrichtung (Prüftemperatur: 23 ± 2 °C).

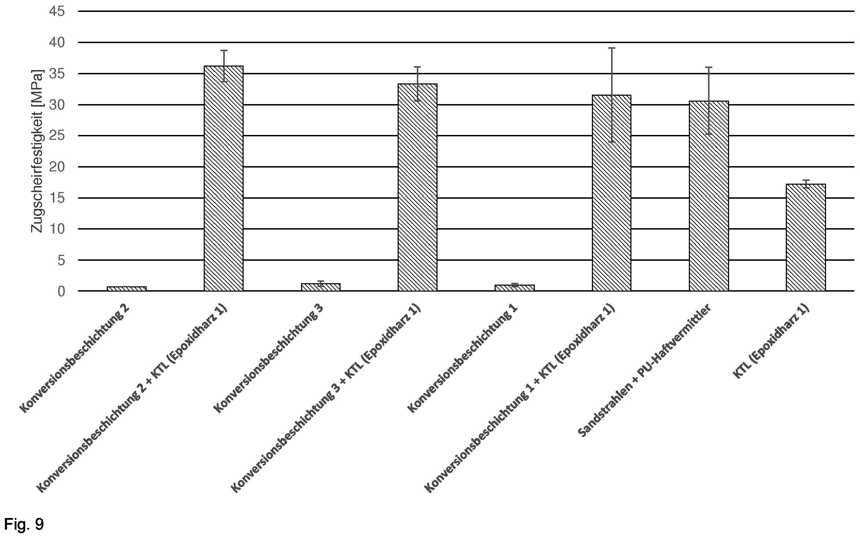

Die Ergebnisse der Scherhaftkräfte sind in Tabelle 2 zusammengefasst und in Fig. 8 bzw. 9 vergleichend dargestellt.

**Tabelle 2**

| Ergebnisse der Scherhaftkräfte | | |
|---|---|---|
| Oberflächenbehandlung/- beschichtung | Ohne KTL | Mit KTL (Epoxidharz 1) |
| | SBS [MPa] | SBS [MPa] |
| - | Aluminium (EN AW 6068) | |
| Konversionsbeschichtung 1 | 1.0 ± 0.3 | 31.5 ± 7.6 |
| Konversionsbeschichtung 2 | 0.7 ± 0.0 | 36.2 ± 2.5 |
| Konversionsbeschichtung 3 | 1.2 ± 0.4 | 33.3 ± 2.7 |
| ohne | - | 17.2 ± 0.6 |
| Sandstrahlung, PU-Haftvermittler | 30.6 ± 5.4 | - |
| - | Stahl (Domex 650 MC) | |
| Konversionsbeschichtung 1 | 1.6 ± 0.3 | 39.0 ± 3.1 |
| Konversionsbeschichtung 2 | 0.9 ± 0.2 | 29.1 ± 5.2 |
| Sandstrahlung, PU-Haftvermittler | 32.3 ± 0.3 | - |

Es konnte im Rahmen der vorliegenden Erfindung gezeigt werden, dass eine Beschichtung mittels kathodischer Tauchlackierung auf Epoxidharzbasis -hier gezeigt mit Epoxidharz 1- und zusätzlicher Konversionsbeschichtung unterhalb der KTL-Beschichtung in Bezug auf die Anforderungen an die Haftvermittlung zwischen einem Kunststoffkörper und einem metallischen Körper einer reinen KTL-Beschichtung bzw. einer reinen Konversionsbeschichtung deutlich überlegen war bzw. die Anforderungen an die Haftvermittlung zwischen einem Kunststoffkörper und einem metallischen Körper deutlich besser erfüllte, auch deutlich besser als eine Kombination aus einer herkömmlichen galvanischen Korrosionsschutzbeschichtung (ZnNi oder ZnFe) und einem für diesen Zweck zusätzlich aufgetragener Haftvermittler. Die Ergebnisse sind vergleichbar bzw. sogar besser als die, welche mittels Sandstrahlen und mit einem handelsüblichen PU-Haftvermittler erzielt wurden. Das Vorgehen mittels Sandstrahlen und PU-Haftvermittler ist im Vergleich zur erfindungsgemäßen Variante deutlich aufwendiger: für den Auftrag des PU-Haftvermittlers muss abgeklebt und dann partiell gesprüht werden. Die erfindungsgemäße Variante mit Konversionsbeschichtung und KTL (Tauchen) ist deutlich simpler und wirtschaftlich vorteilhaft.

### Bezugszeichen

- 1: beschichteter metallischer Körper
- 2: metallischer Körper
- 3: Beschichtung
- 4: Dämpfungselement
- 5: Kompositelement
- 6: Kunststoffkörper
- 7: weiterer Körper
- 8: innere Oberfläche
- 9: äußere Oberfläche

### Beschreibung der Figuren

- Fig. 1: zeigt eine perspektivische Ansicht eines beschichteten metallischen Körpers 1, wobei der metallische Körper 2 hier in Form eines Rings vorliegt, welcher eine Beschichtung 3 umfassend ein Epoxidharz auf mindestens einem Teil seiner Oberfläche aufweist;
- Fig. 2: zeigt einen Schnitt durch ein Dämpfungselement 4, umfassend ein Kompositelement 5 welches einen Kunststoffkörper 6 umfassend mindestens ein Polyurethan und einen beschichteten metallischen Körper 1 aufweist, welches wiederum zumindest anteilig von einem weiteren Körper 7, hier einem weiteren Kunststoffkörper 7, umgeben ist;
- Fig. 3: zeigt einen metallischen Körper 1 in Form eines (Hohl)Zylinders (Innenhülse) und einen weiteren, ebenfalls metallischen, Körper 7 in Form eines weiteren Hohlzylinders (Außenhülse) für ein Rundlager, wobei die Außenhülse eine Beschichtung zumindest auf einem Teil ihrer inneren Oberfläche 8 aufweist (nicht gezeigt) und die Innenhülse zumindest auf einem Teil ihrer äußeren Oberfläche 9 eine Beschichtung aufweist (nicht gezeigt);
- Fig. 4: zeigt einen Schnitt durch ein Rundlager umfassend eine Innenhülse 1, eine Außenhülse 7 und einen Kunststoffkörper 6 zwischen Innen- und Außenhülse;
- Fig. 5: zeigt schematisch einen für die Untersuchung der Haftfestigkeit eingesetzten Probenkörper, wobei die Zahlenangaben als Längenangaben in Millimeter zu verstehen sind (z.B. 12.5 = 12, 5 mm), wobei unter (a) eine Seitenansicht und unter (b) die entsprechende Vorderansicht gezeigt ist;
- Fig. 6: zeigt die Ergebnisse der Haftfestigkeitsuntersuchungen (Zugscherfestigkeit) für einen mit Epoxidharz beschichteten metallischen Körper + Kunststoffkörper im Vergleich zu einem galvanisch mit ZnFe-beschichteten metallischen + Kunststoffkörper;
- Fig. 7: zeigt die Ergebnisse der Berstkraftuntersuchungen für ein Dämpfungselement basierend auf einem mit Epoxidharz beschichteten metallischen Körper + Kunststoffkörper im Vergleich zu einem für ein Dämpfungselement basierend auf einem galvanisch mit ZnFe-beschichteten metallischen + Kunststoffkörper;
- Fig. 8: zeigt schematisch die für die Berstkraftuntersuchungen verwendete Vorrichtung (Berstprüfungslager);
- Fig. 9: zeigt die Ergebnisse der Haftfestigkeitsuntersuchungen (Zugscherfestigkeit) für einen konversionsbeschichteten und mit Epoxidharz beschichteten metallischen Körper (Aluminium) + Kunststoffkörper im Vergleich zu einem metallischen Körper (Aluminium), welcher nur konversionsbeschichtet wurde + Kunststoffkörper und im Vergleich zu einem metallischen Körper (Aluminium), welcher sandgestrahlt und mit einem Konventionellen PU-Haftvermittler beschichtet wurde + Kunststoffkörper;

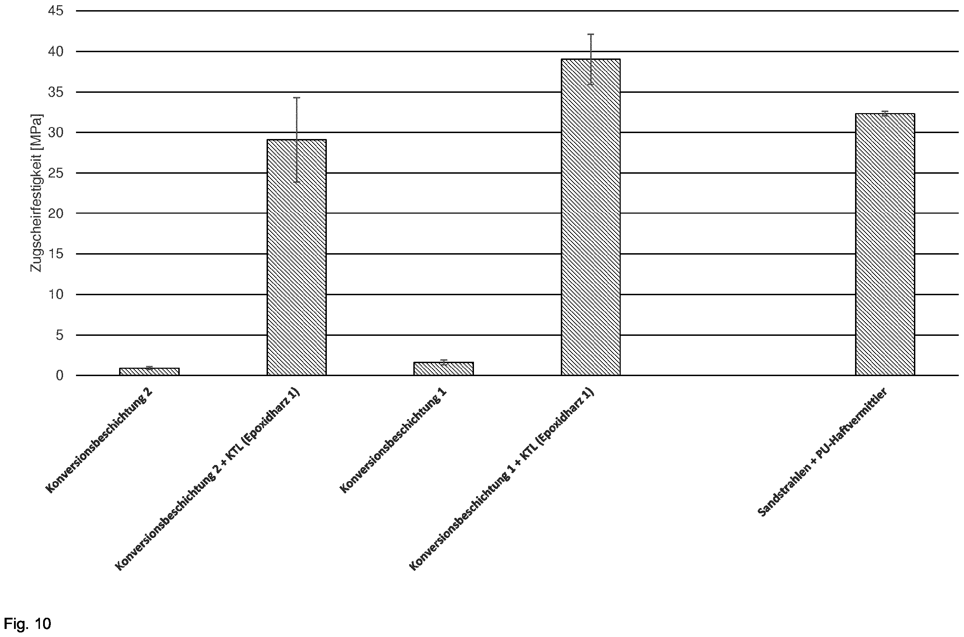

- Fig. 10: zeigt die Ergebnisse der Haftfestigkeitsuntersuchungen (Zugscherfestigkeit) für einen konversionsbeschichteten und mit Epoxidharz beschichteten metallischen Körper (Stahl) + Kunststoffkörper im Vergleich zu einem metallischen Körper (Stahl), welcher nur konversionsbeschichtet wurde + Kunststoffkörper und im Vergleich zu einem metallischen Körper (Stahl), welcher sandgestrahlt und mit einem Konventionellen PU-Haftvermittler beschichtet wurde + Kunststoffkörper.

### Angeführte Literatur

US 8,459,621 B1
EP 0 961 797 B1
WO 98/33835 A1
EP 1 379 588 B1
EP 1 171 515 B1
US 2011/135867A1

## Patentansprüche

1. Kompositelement, insbesondere für ein Dämpfungselement, umfassend
a) mindestens einen metallischen Körper aufweisend eine Oberfläche;
b) eine Beschichtung umfassend ein Epoxidharz auf mindestens einem Teil der Oberfläche des metallischen Körpers;
c) einen Kunststoffkörper umfassend mindestens ein Polyurethan, welcher den metallischen Körper gemäß (a) zumindest teilweise umschließt und im Bereich der Umschließung zumindest teilweise in direktem Kontakt mit der Beschichtung gemäß (b) steht;
wobei das Kompositelement zwischen der Oberfläche des metallischen Körpers (a) und der Beschichtung (b) eine Konversionsschicht (d) aufweist, welche mindestens eine Verbindung ausgewählt aus der Gruppe von Zirkon(IV)oxid, Zink(II)phosphat und Chromat umfasst.

2. Kompositelement nach Anspruch 1, wobei das Epoxidharz gemäß (b) ein Epoxidharz ist, welches bevorzugt erhalten oder erhältlich ist aus einer wasserhaltigen Epoxidharz-Dispersion, welche bevorzugt mehr als 50 Gewichts-% Wasser, bezogen auf das Gesamtgewicht der wasserhaltigen Epoxidharz-Dispersion, aufweist.

3. Kompositelement nach Anspruch 2, wobei die Epoxidharz-Dispersion ein Epoxidharz aufweisend Ammoniumgruppen umfasst, erhalten oder erhältlich durch
A) Umsetzung mindestens der Komponenten
i) ein Vorprodukt, welches unter Zusatz von Phosphinen und/oder Phosphinsalzen als Katalysator hergestellt oder herstellbar ist aus
i.a) mindestens einer Diepoxidverbindung;
i.b) mindestens einem Mono- oder Diphenol oder einer Mischung aus einem Mono- und einem Diphenol;
ii) mindestens einem organischen Amin;
bei einer Zugabetemperatur im Bereich von 60 bis 130°C zu einem Epoxid-Amin-Addukt;
B) anschließende oder gleichzeitige Umsetzung der sekundären Hydroxylgruppen, die bei der Umsetzung der Komponenten i.a) und i.b) gebildet worden sind, mit Epoxidgruppen des in Stufe A) hergestellten Epoxid-Amin-Adduktes bei einer Temperatur von 110 bis 150°C,
C) Zusatz mindestens eines Vernetzungsmittels bei einer Temperatur von <150°C,
D) Neutralisierung;
E) Dispergierung der in den Stufen A) bis D) erhaltenen Mischung in Wasser.

4. Kompositelement nach einem der Ansprüche 1 bis 3, wobei der metallische Körper eine Eisenlegierung, bevorzugt Stahl, oder Aluminium, umfasst.

5. Kompositelement nach einem der Ansprüche 1 bis 4, wobei der metallische Körper eine Form ausgewählt aus der Gruppe bestehend aus Scheibe, Lochscheibe, Ring, Zylinder und Hohlzylinder aufweist, wobei ein Hohlzylinder bevorzugt auch eine Hülse umfasst.

6. Dämpfungselement, umfassend
(1) ein Kompositelement gemäß einem der Ansprüche 1 bis 5 umfassend
a) einen metallischen Körper aufweisend eine Oberfläche;
b) eine Beschichtung umfassend ein Epoxidharz auf mindestens einem Teil der Oberfläche des metallischen Körpers;
c) einen Kunststoffkörper umfassend mindestens ein Polyurethan, welcher den metallischen Körper gemäß (a) zumindest teilweise umschließt und im Bereich der Umschließung zumindest teilweise in direktem Kontakt mit der Beschichtung gemäß (b) steht;
(2) mindestens einen weiteren Körper, welcher zumindest teilweise in direktem Kontakt mit dem Kompositelement gemäß (1), bevorzugt mit dem Kunststoffkörper gemäß (c), steht;
wobei das Kompositelement (1) zwischen der Oberfläche des metallischen Körpers (a) und der Beschichtung (b) eine Konversionsschicht (d) aufweist, welche mindestens eine Verbindung ausgewählt aus der Gruppe von Zirkon(IV)oxid, Zink(II)phosphat und Chromat umfasst.

7. Dämpfungselement nach Anspruch 6, wobei der mindestens eine weitere Körper eine Beschichtung (b') umfassend ein Epoxidharz auf mindestens einem Teil seiner Oberfläche aufweist.

8. Dämpfungselement nach Anspruch 6 oder 7, wobei der metallische Körper eine Eisenlegierung, bevorzugt Stahl, oder Aluminium umfasst.

9. Dämpfungselement nach einem der Ansprüche 6 bis 8,wobei der mindestens eine weitere Körper einen metallischen Körper umfasst, bevorzugt aus einem metallischen Körper besteht, wobei der metallische Körper bevorzugt eine Eisenlegierung, weiter bevorzugt Stahl, oder Aluminium, umfasst.

10. Dämpfungselement nach einem der Ansprüche 6 bis 8, wobei der mindestens eine weitere Körper ein Polyurethan umfasst, bevorzugt ein zelliges Polyurethan, bevorzugt ein zelliges Polyurethan aufweisend eine Dichte im Bereich von 200 bis 1100 kg/m³, weiter bevorzugt eine Dichte im Bereich von 200 bis 750 kg/m³.

11. Verfahren zur Herstellung eines Kompositelements, wobei das Kompositelement
a) mindestens einen metallischen Körper aufweisend eine Oberfläche;
b) eine Beschichtung umfassend ein Epoxidharz auf mindestens einem Teil der Oberfläche des metallischen Körpers;
c) einen Kunststoffkörper umfassend mindestens ein Polyurethan, welcher den metallischen Körper gemäß (a) zumindest teilweise umschließt und im Bereich der Umschließung zumindest teilweise in direktem Kontakt mit der Beschichtung gemäß (b) steht; umfasst;
wobei das Kompositelement zwischen der Oberfläche des metallischen Körpers (a) und der Beschichtung (b) eine Konversionsschicht (d), welche mindestens eine Verbindung ausgewählt aus der Gruppe von Zirkon(IV)oxid, Zink(II)phosphat und Chromat umfasst; umfassend:
I) Bereitstellen mindestens eines metallischen Körpers aufweisend eine Oberfläche und eine Beschichtung umfassend ein Epoxidharz auf mindestens einem Teil der Oberfläche des metallischen Körpers; wobei sich zwischen der Oberfläche des metallischen Körpers (a) und der Beschichtung (b) eine Konversionsschicht (d) befindet, welche mindestens eine Verbindung ausgewählt aus der Gruppe von Zirkon(IV)oxid, Zink(II)phosphat und Chromat umfasst;
II) Einbetten des beschichteten metallischen Körpers gemäß (I) in eine Kunststoffzusammensetzung umfassend mindestens ein Polyurethan, wobei der beschichtete metallische Körper zumindest teilweise von der Kunststoffzusammensetzung umschlossen wird und diese im Bereich der Umschließung zumindest teilweise in direktem Kontakt mit der Beschichtung gemäß (b) gelangt.

12. Verfahren zur Herstellung eines Dämpfungselements umfassend
(1) ein Kompositelement umfassend
a) mindestens einen metallischen Körper aufweisend eine Oberfläche;
b) eine Beschichtung umfassend ein Epoxidharz auf mindestens einem Teil der Oberfläche des metallischen Körpers;
c) einen Kunststoffkörper umfassend mindestens ein Polyurethan, welcher den metallischen Körper gemäß (a) zumindest teilweise umschließt und im Bereich der Umschließung zumindest teilweise in direktem Kontakt mit der Beschichtung gemäß (b) steht;
wobei das Kompositelement (1) zwischen der Oberfläche des metallischen Körpers (a) und der Beschichtung (b) eine Konversionsschicht (d) aufweist, welche mindestens eine Verbindung ausgewählt aus der Gruppe von Zirkon(IV)oxid, Zink(ll)phosphat und Chromat, umfasst;
(2) mindestens einen weiteren Körper, welcher zumindest teilweise in direktem Kontakt mit dem Kompositelement gemäß (1), bevorzugt mit dem Kunststoffkörper gemäß (c), steht;
umfassend
II.1) Einbringen des metallischen Körpers aufweisend eine Oberfläche und eine Beschichtung umfassend ein Epoxidharz auf mindestens einem Teil der Oberfläche des metallischen Körpers in eine Form, bevorzugt eine Gußform,
II.2) Einbringen des weiteren Körpers in die Form, bevorzugt in die Gußform, wobei ein Teil der Form, bevorzugt zwischen metallischem Körper gemäß (II.1) und weiterem Körper, leer verbleibt;
II.3) Einbringen der Kunststoffzusammensetzung in den leer verbliebenen Teil der Form aus (II.2).

13. Verwendung eines Kompositelements gemäß einem der Ansprüche 1 bis 5 oder eines Dämpfungselements gemäß einem der Ansprüche 6 bis 10 für ein Kraftfahrtzeugbauteil, insbesondere ein Automobilbauteil, ein Flugzeugbauteil oder ein Schiffsbauteil, bevorzugt für ein Automobilbauteil.

## Claims

1. A composite element, especially for a damping element, comprising
a) at least one metallic body having a surface;
b) a coating comprising an epoxy resin on at least part of the surface of the metallic body;
c) a plastics body comprising at least one polyurethane, which at least partly surrounds the metallic body of (a) and in the region of the surround is at least partly in direct contact with the coating of (b);
wherein the composite element between the surface of the metallic body (a) and the coating (b) has a conversion layer (d) which comprises at least one compound selected from the group of zirconium(IV) oxide, zinc(II) phosphate, and chromate.

2. The composite element according to claim 1, wherein the epoxy resin of (b) is an epoxy resin which is preferably obtained or obtainable from a water-containing epoxy resin dispersion which has preferably more than 50 weight% of water, based on the total weight of the water-containing epoxy resin dispersion.

3. The composite element according to claim 2, wherein the epoxy resin dispersion comprises an epoxy resin having ammonium groups, obtained or obtainable by
A) reacting at least the components
i) a precursor prepared or preparable, with addition of phosphines and/or phosphine salts as catalyst, from
i.a) at least one diepoxide compound;
i.b) at least one mono- or diphenol or a mixture of a mono- and a diphenol;
ii) at least one organic amine;
at an addition temperature in the range from 60 to 130°C to give an epoxide-amine adduct;
B) subsequently or simultaneously reacting the secondary hydroxyl groups, formed in the reaction of components i.a) and i.b), with epoxide groups of the epoxide-amine adduct prepared in stage A), at a temperature of 110 to 150°C,
C) adding at least one crosslinking agent at a temperature of < 150°C,
D) neutralizing;
E) dispersing the mixture obtained in stages A) to D) in water.

4. The composite element according to any of claims 1 to 3, wherein the metallic body comprises an iron alloy, preferably steel, or aluminum.

5. The composite element according to any of claims 1 to 4, wherein the metallic body has a shape selected from the group consisting of disk, perforated disk, ring, cylinder, and hollow cylinder, where a hollow cylinder preferably also comprises a sleeve.

6. A damping element comprising
(1) a composite element according to any of claims 1 to 5 comprising
a) a metallic body having a surface;
b) a coating comprising an epoxy resin on at least part of the surface of the metallic body;
c) a plastics body comprising at least one polyurethane, which at least partly surrounds the metallic body of (a) and in the region of the surround is at least partly in direct contact with the coating of (b);
(2) at least one further body which is at least partly in direct contact with the composite element of (1), preferably with the plastics body of (c);
wherein the composite element (1) between the surface of the metallic body (a) and the coating (b) has a conversion layer (d) which comprises at least one compound selected from the group of zirconium(IV) oxide, zinc(II) phosphate, and chromate.

7. The damping element according to claim 6, wherein the at least one further body has a coating (b') comprising an epoxy resin on at least part of its surface.

8. The damping element according to claim 6 or 7, wherein the metallic body comprises an iron alloy, preferably steel, or aluminum.

9. The damping element according to any of claims 6 to 8, wherein the at least one further body comprises a metallic body, preferably consists of a metallic body, where the metallic body preferably comprises an iron alloy, more preferably steel, or aluminum.

10. The damping element according to any of claims 6 to 8, wherein the at least one further body comprises a polyurethane, preferably a cellular polyurethane, preferably a cellular polyurethane having a density in the range from 200 to 1100 kg/m³, more preferably a density in the range from 200 to 750 kg/m³.

11. A process for producing a composite element, wherein the composite element comprises
a) at least one metallic body having a surface;
b) a coating comprising an epoxy resin on at least part of the surface of the metallic body;
c) a plastics body comprising at least one polyurethane, which at least partly surrounds the metallic body of (a) and in the region of the surround is at least partly in direct contact with the coating of (b);
wherein the composite element between the surface of the metallic body (a) and the coating (b) has a conversion layer (d) which comprises at least one compound selected from the group of zirconium(IV) oxide, zinc(II) phosphate, and chromate;
comprising:
I) providing at least one metallic body having a surface and a coating comprising an epoxy resin on at least part of the surface of the metallic body; wherein between the surface of the metallic body (a) and the coating (b) there is a conversion layer (d) which comprises at least one compound selected from the group of zirconium(IV) oxide, zinc(II) phosphate, and chromate;
II) embedding the coated metallic body of (I) into a plastics composition comprising at least one polyurethane, wherein the coated metallic body is at least partly surrounded by the plastics composition and the latter in the region of the surround enters at least partly into direct contact with the coating of (b).

12. A process for producing a damping element comprising
(1) a composite element comprising
a) at least one metallic body having a surface;
b) a coating comprising an epoxy resin on at least part of the surface of the metallic body;
c) a plastics body comprising at least one polyurethane, which at least partly surrounds the metallic body of (a) and in the region of the surround is at least partly in direct contact with the coating of (b);
wherein the composite element (1) between the surface of the metallic body (a) and the coating (b) has a conversion layer (d) which comprises at least one compound selected from the group of zirconium(IV) oxide, zinc(II) phosphate, and chromate;
(2) at least one further body which is at least partly in direct contact with the composite element of (1), preferably with the plastics body of (c);
comprising
II.1) introducing the metallic body having a surface and a coating comprising an epoxy resin on at least one part of the surface of the metallic body into a mold, preferably a casting mold,
II.2) introducing the further body into the mold, preferably into the casting mold, with a part of the mold, preferably between metallic body of (II.1) and further body, remaining empty;
II.3) introducing the plastics composition into the part of the mold from (II.2) that has remained empty.

13. The use of a composite element according to any of claims 1 to 5 or of a damping element according to any of claims 6 to 10 for an automotive component, more particularly an automobile component, an aircraft component or a nautical component, preferably for an automobile component.

## Revendications

1. Élément composite, en particulier pour un élément d'amortissement, comprenant
a) au moins un corps métallique ayant une surface ;
b) un revêtement comprenant une résine époxyde sur au moins une partie de la surface du corps métallique ;
c) un corps plastique comprenant au moins un polyuréthane, qui entoure au moins partiellement le corps métallique selon (a), et qui dans la zone entourante est au moins partiellement en contact direct avec le revêtement selon (b) ;
l'élément composite présentant entre la surface du corps métallique (a) et le revêtement (b) une couche de conversion (d) qui comprend au moins un composé choisi dans le groupe oxyde de zirconium(IV), phosphate de zinc(II) et chromate.

2. Élément composite selon la revendication 1, dans lequel la résine époxyde selon (b) est une résine époxyde qui de préférence est obtenue ou peut être obtenue à partir d'une dispersion aqueuse de résine époxyde, qui de préférence comprend plus de 50 % en poids d'eau, par rapport au poids total de la dispersion aqueuse de résine époxyde.

3. Élément composite selon la revendication 2, dans lequel la dispersion de résine époxyde comprend une résine époxyde ayant des groupes ammonium, obtenue ou pouvant être obtenue par
A) réaction d'au moins les composants
i) un précurseur, qui est fabriqué ou peut être fabriqué par utilisation de phosphines et/ou de sels de phosphine en tant que catalyseur, à partir
i.a) d'au moins un composé diépoxyde ;
i.b) d'au moins un mono- ou diphénol ou d'un mélange d'un mono- et d'un diphénol ;
ii) au moins une amine organique ;
à une température d'addition dans la plage de 60 à 130 °C, pour obtenir un produit d'addition époxyde-amine ;
B) réaction, subséquente ou simultanée, des groupes hydroxyle secondaires qui ont été formés lors de la réaction des composants i.a) et i.b), avec les groupes époxydes du produit d'addition époxyde-amine fabriqué dans l'étape A), à une température de 110 à 150 °C,
C) addition d'au moins un agent de réticulation à une température < 150 °C,
D) neutralisation ;
E) dispersion dans l'eau du mélange obtenu dans les étapes A) à D).

4. Élément composite selon l'une des revendications 1 à 3, dans lequel le corps métallique comprend un alliage de fer, de préférence de l'acier, ou de l'aluminium.

5. Élément composite selon l'une des revendications 1 à 4, dans lequel le corps métallique présente une forme choisie dans le groupe consistant en un disque, un disque perforé, un anneau, un cylindre et un cylindre creux, un cylindre creux comprenant de préférence aussi une douille.

6. Élément d'amortissement comprenant
(1) un élément composite selon l'une des revendications 1 à 5, comprenant
a) au moins un corps métallique ayant une surface ;
b) un revêtement comprenant une résine époxyde sur au moins une partie de la surface du corps métallique ;
c) un corps plastique comprenant au moins un polyuréthane, qui entoure au moins partiellement le corps métallique selon (a), et qui dans la zone entourante est au moins partiellement en contact direct avec le revêtement selon (b) ;
(2) au moins un autre corps, qui au moins partiellement est en contact direct avec l'élément composite selon (1), de préférence avec le corps plastique selon (c) ;
l'élément composite (1) présentant entre la surface du corps métallique (a) et le revêtement (b) une couche de conversion (d), qui comprend au moins un composé choisi dans le groupe oxyde de zirconium(IV), phosphate de zinc(II) et chromate.

7. Élément d'amortissement selon la revendication 6, dans lequel l'au moins un autre corps présente un revêtement (b') comprenant une résine époxyde sur au moins une partie de sa surface.

8. Élément d'amortissement selon la revendication 6 ou 7, dans lequel le corps métallique comprend un alliage de fer, de préférence de l'acier, ou de l'aluminium.

9. Élément d'amortissement selon l'une des revendications 6 à 8, dans lequel l'au moins un autre corps comprend un corps métallique, de préférence est constitué d'un corps métallique, le corps métallique comprenant de préférence un alliage de fer, plus préférentiellement de l'acier, ou de l'aluminium.

10. Élément d'amortissement selon l'une des revendications 6 à 8, dans lequel l'au moins un autre corps comprend un polyuréthane, de préférence un polyuréthane alvéolaire, de préférence un polyuréthane alvéolaire ayant une masse volumique dans la plage de 200 à 1 100 kg/m³, plus préférentiellement une masse volumique dans la plage de 200 à 750 kg/m³.

11. Procédé de fabrication d'un élément composite, l'élément composite comprenant
a) au moins un corps métallique ayant une surface ;
b) un revêtement comprenant une résine époxyde sur au moins une partie de la surface du corps métallique ;
c) un corps plastique comprenant au moins un polyuréthane, qui entoure au moins partiellement le corps métallique selon (a), et qui dans la zone entourante est au moins partiellement en contact direct avec le revêtement selon (b) ;
l'élément composite comprenant entre la surface du corps métallique (a) et le revêtement (b) une couche de conversion (d) qui comprend au moins un composé choisi dans le groupe oxyde de zirconium(IV), phosphate de zinc(II) et chromate ;
I) fourniture d'au moins un corps métallique présentant une surface et un revêtement comprenant une résine époxyde sur au moins une partie de la surface du corps métallique ; une couche de conversion (d) qui comprend au moins un composé choisi dans le groupe oxyde de zirconium(IV), phosphate de zinc(II) et chromate se trouvant entre la surface du corps métallique (a) et le revêtement (b) ;
II) incorporation du corps métallique revêtu selon (I) dans une composition plastique comprenant au moins un polyuréthane, le corps métallique revêtu étant au moins partiellement entouré de la composition plastique et cette dernière entrant, dans la zone entourante, au moins partiellement en contact direct avec le revêtement selon (b).

12. Procédé de fabrication d'un élément d'amortissement comprenant
(1) un élément composite comprenant
a) au moins un corps métallique ayant une surface ;
b) un revêtement comprenant une résine époxyde sur au moins une partie de la surface du corps métallique ;
c) un corps plastique comprenant au moins un polyuréthane, qui entoure au moins partiellement le corps métallique selon (a), et qui dans la zone entourante est au moins partiellement en contact direct avec le revêtement selon (b) ;
dans lequel l'élément composite (1) présente entre la surface du corps métallique (a) et le revêtement (b) une couche de conversion (d) qui comprend au moins un composé choisi dans le groupe oxyde de zirconium(IV), phosphate de zinc(II) et chromate ;
(2) au moins un autre corps, qui au moins partiellement est en contact direct avec l'élément composite selon (1), de préférence avec le corps plastique selon (c) ;
comprenant
II.1) introduction dans un moule, de préférence un moule pour injection, du corps métallique présentant une surface et un revêtement comprenant une résine époxyde sur au moins une partie de la surface du corps métallique,
II.2) introduction de l'autre corps dans le moule, de préférence dans le moule pour injection, une partie du moule restant vide, de préférence entre le corps métallique selon (II.1) et l'autre corps ;
II.3) introduction de la composition plastique dans la partie du moule de (II.2) restant vide.

13. Utilisation d'un élément composite selon l'une des revendications 1 à 5 ou d'un élément d'amortissement selon l'une des revendications 6 à 10 pour un composant de véhicule à moteur, en particulier un composant pour automobile, un composant pour avion ou un composant pour bateau, de préférence un composant pour automobile.
